(19) Europäisches Patentamt
European Patent Office
Office européen des brevets

(11) **EP 4 228 191 A1**

(12) **EUROPEAN PATENT APPLICATION**
published in accordance with Art. 153(4) EPC

(43) Date of publication:
**16.08.2023  Bulletin 2023/33**

(21) Application number: **21880464.9**

(22) Date of filing: **12.10.2021**

(51) International Patent Classification (IPC):
**H04L 5/00** (2006.01)      **H04W 64/00** (2009.01)
**H04W 76/28** (2018.01)      **H04W 52/02** (2009.01)

(52) Cooperative Patent Classification (CPC):
**H04L 5/00; H04W 52/02; H04W 64/00;
H04W 76/28;** Y02D 30/70

(86) International application number:
**PCT/KR2021/014017**

(87) International publication number:
**WO 2022/080817 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2020  KR 20200130999
19.10.2020  KR 20200134904**

(71) Applicant: **LG Electronics Inc.**
**Yeongdeungpo-gu**
**Seoul, 07336 (KR)**

(72) Inventors:
• **LEE, Jeongsu**
**Seoul 06772 (KR)**
• **CHA, Hyunsu**
**Seoul 06772 (KR)**
• **LEE, Youngdae**
**Seoul 06772 (KR)**
• **KIM, Kijun**
**Seoul 06772 (KR)**
• **KO, Hyunsoo**
**Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING AND RECEIVING SIGNAL IN WIRELESS COMMUNICATION SYSTEM, AND APPARATUS SUPPORTING SAME**

(57)      Various embodiments relate to next generation wireless communication systems for supporting higher data transmission rates than 4th generation (4G) systems. According to various embodiments, a method for transmitting and receiving a signal and an apparatus for supporting same in a wireless communication system can be provided, and various other embodiments can also be provided.

FIG. 19

EP 4 228 191 A1

**Description**

**TECHNICAL FIELD**

Various embodiments relate to a wireless communication system.

**BACKGROUND**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

**DISCLOSURE**

**TECHNICAL PROBLEM**

Various embodiments may provide a method and apparatus for transmitting and receiving a signal in a wireless communication system.

Various embodiments of the present disclosure may provide a positioning method in a wireless communication system and apparatus for supporting the same.

It will be appreciated by persons skilled in the art that the objects that could be achieved with the various embodiments are not limited to what has been particularly described hereinabove and the above and other objects that the various embodiments could achieve will be more clearly understood from the following detailed description.

**TECHNICAL SOLUTION**

Various embodiments of the present disclosure may provide a method of transmitting and receiving a signal in a wireless communication system and apparatus for supporting the same.

According to various embodiments, a method performed by a user equipment (UE) in a wireless communication system may be provided.

According to various embodiments, the method may include: performing physical downlink control channel (PDCCH) monitoring; and obtaining downlink control information (DCI) from a PDCCH related to paging monitored based on the PDCCH monitoring.

According to various embodiments, based on specific N bits included in the DCI, the UE may be instructed to transmit a sounding reference signal (SRS) for positioning, where N may be a natural number.

According to various embodiments, the specific N bits may correspond to a first bit field included in the DCI.

According to various embodiments, based on the first bit field having a first value, the first bit field may indicate that the UE is to transmit the SRS for the positioning.

According to various embodiments, based on the first bit field having a second value, the first bit field may indicate that the DCI includes scheduling information for the paging.

According to various embodiments, the DCI may include a second bit field related to a short message.

According to various embodiments, the short message may include: (i) information on a system information modification; and (ii) information on an indication of at least one of an earthquake and tsunami warning system (ETWS) or a commercial mobile alert system (CMAS).

According to various embodiments, a most significant bit (MSB) of the second bit field may include the information on the system information modification.

According to various embodiments, a second MSB of the second bit field may include the information on the indication of the at least one of the ETWS or the CMAS.

According to various embodiments, a third MSB of the second bit field may include information on whether the PDCCH monitoring for the PDCCH related to the paging is terminated.

According to various embodiments, based on the specific N bits, which are at least parts of remaining bits except for the MSB, the second MSB, and the third MSB among bits included in the second bit field, the UE may be instructed to transmit the SRS for the positioning.

According to various embodiments, the specific N bits, which are the at least parts of the remaining bits, may indicate a time resource for transmitting the SRS in a bitmap form in units of one of symbols, slots, or subframes.

According to various embodiments, based on that a time window for the positioning is configured, and that a time resource for transmitting the SRS is included within the time window, the SRS may be transmitted.

According to various embodiments, based on that the time window for the positioning is configured, and that the time resource for transmitting the SRS is not included in the time window, the SRS may not be transmitted.

According to various embodiments, for a UE group consisting of a plurality of UEs including the UE, the specific N bits may group-specifically instruct the plurality of UEs to transmit the SRS for the positioning.

According to various embodiments, the DCI may have a cyclic redundancy check (CRC) scrambled with a radio network temporary identifier (RNTI) related to the paging.

According to various embodiments, a user equipment (UE) configured to operate in a wireless communication system may be provided.

According to various embodiments, the UE may include: a transceiver; and at least one processor connected to the transceiver.

According to various embodiments, the at least one processor may be configured to: perform PDCCH monitoring; and obtain DCI from a PDCCH related to paging monitored based on the PDCCH monitoring.

According to various embodiments, based on specific N bits included in the DCI, the UE may be instructed to transmit an SRS for positioning, where N may be a natural number.

According to various embodiments, the specific N bits may correspond to a first bit field included in the DCI.

According to various embodiments, based on the first bit field having a first value, the first bit field may indicate that the UE is to transmit the SRS for the positioning.

According to various embodiments, based on the first bit field having a second value, the first bit field may indicate that the DCI includes scheduling information for the paging.

According to various embodiments, the DCI may include a second bit field related to a short message.

According to various embodiments, the short message may include: (i) information on a system information modification; and (ii) information on an indication of at least one of an earthquake and tsunami warning system (ETWS) or a commercial mobile alert system (CMAS).

According to various embodiments, a most significant bit (MSB) of the second bit field may include the information on the system information modification.

According to various embodiments, a second MSB of the second bit field may include the information on the indication of the at least one of the ETWS or the CMAS.

According to various embodiments, a third MSB of the second bit field may include information on whether the PDCCH monitoring for the PDCCH related to the paging is terminated.

According to various embodiments, based on the specific N bits, which are at least parts of remaining bits except for the MSB, the second MSB, and the third MSB among bits included in the second bit field, the UE may be instructed to transmit the SRS for the positioning.

According to various embodiments, the at least one processor may be configured to communicate with at least one of a mobile terminal, a network, or an autonomous vehicle other than a vehicle including the UE.

According to various embodiments, a method performed by a base station in a wireless communication system may be provided.

According to various embodiments, the method may include: configuring DCI related to paging; and transmitting a PDCCH including the DCI.

According to various embodiments, based on specific N bits included in the DCI, a UE may be instructed to transmit an SRS for positioning, where N may be a natural number.

According to various embodiments, a base station operating in a wireless communication system may be provided.

According to various embodiments, the base station may include a transceiver, and at least one processor coupled with the transceiver.

According to various embodiments, the at least one processor may be configured to: configure DCI related to paging; and transmit a PDCCH including the DCI.

According to various embodiments, based on specific N bits included in the DCI, a UE may be instructed to transmit an SRS for positioning, where N may be a natural number.

According to various embodiments, an apparatus operating in a wireless communication system may be provided.

According to various embodiments, the apparatus may include at least one processor, and at least one memory storing at least one instruction to cause the at least one processor perform a method.

According to various embodiments, the operations may include: performing PDCCH monitoring; and obtaining DCI from a PDCCH related to paging monitored based on the PDCCH monitoring.

According to various embodiments, based on specific N bits included in the DCI, the UE may be instructed to transmit an SRS for positioning, where N may be a natural number.

According to various embodiments, a non-transitory processor-readable medium configured to store one or more instructions that cause at least one processor to perform operations may be provided.

According to various embodiments, the operations may include: performing PDCCH monitoring; and obtaining DCI from a PDCCH related to paging monitored based on the PDCCH monitoring.

According to various embodiments, based on specific N bits included in the DCI, the UE may be instructed to transmit an SRS for positioning, where N may be a natural number.

It will be appreciated by persons skilled in the art that the effects that can be achieved with the various embodiments are not limited to what has been particularly described hereinabove and other advantages of the various embodiments will be more clearly understood from the following detailed description taken in conjunction with the accompanying drawings.

## ADVANTAGEOUS EFFECTS

According to various embodiments, a signal may be effectively transmitted and received in a wireless communication system.

According to various embodiments, positioning may be effectively performed in a wireless communication system.

According to various embodiments, positioning may be supported for a user equipment (UE) in an inactive or idle state

It will be appreciated by persons skilled in the art that the effects that can be achieved with the various embodiments are not limited to what has been particularly described hereinabove and other advantages of the various embodiments will be more clearly understood from the following detailed description taken in conjunction with the accompanying drawings.

## BRIEF DESCRIPTION OF THE DRAWINGS

The accompanying drawings are provided to help understanding of various embodiments, along with a detailed description. However, the technical features of various embodiments are not limited to a specific drawing, and features disclosed in each drawing may be combined with each other to constitute a new embodiment. Reference numerals in each drawing denote structural elements.

FIG. 1 is a diagram illustrating physical channels and a signal transmission method using the physical channels, which may be used in various embodiments;

FIG. 2 is a diagram illustrating a radio frame structure in a new radio access technology (NR) system to which various embodiments are applicable;

FIG. 3 illustrates an exemplary resource grid to which various embodiments are applicable.

FIG. 4 is a diagram illustrating mapping of physical channels in a slot, to which various embodiments are applicable.

FIG. 5 is a diagram illustrating radio resource control (RRC) states, RRC state transition, and a mobility procedure supported between an NR/next generation core (NGC) and an evolved-universal terrestrial radio access network/evolved packet core (E-UTRAN/EPC), to which various embodiments are applicable.

FIG. 6 is a diagram illustrating an exemplary discontinuous reception (DRX) operation according to various embodiments.

FIG. 7 is a diagram illustrating an example of a timing relationship between a WUS and a PO to which various embodiments are applicable.

FIG. 8 is a diagram illustrating an example of WUS DCI to which various embodiments are applicable.

FIG. 9 is a diagram illustrating a positioning protocol configuration for positioning a user equipment (UE), to which various embodiments are applicable.

FIG. 10 illustrates an exemplary system architecture for measuring positioning of a UE to which various embodiments are applicable.

FIG. 11 illustrates an implementation example of a network for UE positioning.

FIG. 12 is a diagram illustrating protocol layers for supporting LTE positioning protocol (LPP) message transmission, to which various embodiments are applicable.

FIG. 13 is a diagram illustrating protocol layers for supporting NR positioning protocol a (NRPPa) protocol data unit (PDU) transmission, to which various embodiments are applicable.

FIG. 14 is a diagram illustrating an observed time difference of arrival (OTDOA) positioning method, to which various embodiments are applicable.

FIG. 15 is a diagram illustrating a multi-round trip time (multi-RTT) positioning method to which various embodiments are applicable.

FIG. 16 is a simplified diagram illustrating a method of operating a UE, a transmission and reception point (TRP), a location server, and/or a location management function (LMF) according to various embodiments.

FIG. 17 is a simplified diagram illustrating a method of operating a UE, a TRP, a location server, and/or an LMF according to various embodiments.

FIG. 18 is a diagram illustrating exemplary positioning reference signal (PRS) measurement of an RRC idle/inactive UE according to various embodiments.

FIG. 19 is a diagram schematically illustrating a method of operating a UE and a network node according to various embodiments.

FIG. 20 is a flowchart illustrating a method of operating a UE according to various embodiments.

FIG. 21 is a flowchart illustrating a method of operating a network node according to various embodiments.

FIG. 22 is a block diagram illustrating an apparatus for implementing various embodiments;

FIG. 23 illustrates an exemplary communication system to which various embodiments are applied.

FIG. 24 illustrates exemplary wireless devices to which various embodiments are applicable.

FIG. 25 illustrates other exemplary wireless devices to which various embodiments are applied.

FIG. 26 illustrates an exemplary portable device to which various embodiments are applied.

FIG. 27 illustrates an exemplary vehicle or autonomous driving vehicle to which various embodiments.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

Various embodiments are described in the context of a 3GPP communication system (e.g., including LTE, NR, 6G, and next-generation wireless communication systems) for clarity of description, to which the technical spirit of the various embodiments is not limited. For the background art, terms, and abbreviations used in the description of the various embodiments, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

## 1. 3GPP System

### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

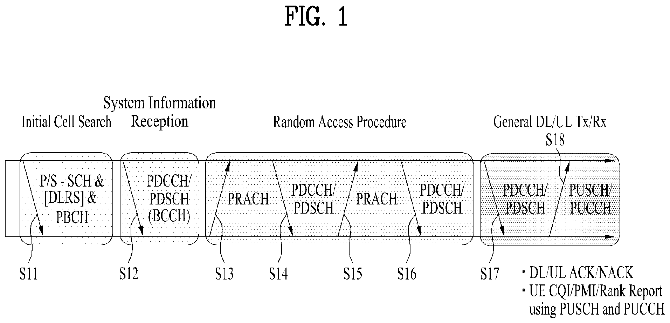

FIG. 1 is a diagram illustrating physical channels and a signal transmission method using the physical channels, which may be used in various embodiments.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Physical Resource

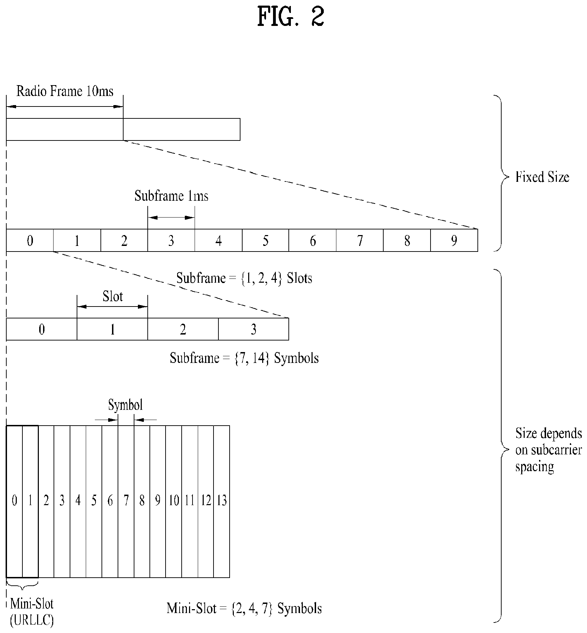

FIG. 2 is a diagram illustrating a radio frame structure in an NR system to which various embodiments are applicable.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part (BWP), $\mu$ and a CP are obtained from RRC parameters provided by the BS.

[Table 1]

| $\mu$ | $\Delta f = 2^{\mu} \cdot 15$[kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15kHz, a dense-urban area, a lower latency, and a wider carrier bandwidth are supported for an SCS of 30kHz/60kHz, and a larger bandwidth than 24.25GHz is supported for an SCS of 60kHz or more, to overcome phase noise.

An NR frequency band is defined by two types of frequency ranges, FR1 and FR2. FR1 may be a sub-6GHz range, and FR2 may be an above-6GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz - 7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, $T_c = 1/(\triangle f_{max}*N_f)$ where $\triangle f_{max} = 480*10^3$ Hz and a value $N_f$ related to a fast Fourier transform (FFT) size or an inverse fast Fourier transform (IFFT) size is given as $N_f = 4096$. $T_c$ and $T_s$ which is an LTE-based time unit and sampling time, given as $T_s = 1/((15kHz)*2048)$ are placed in the following relationship: $T_s/T_c = 64$. DL and UL transmissions are organized into (radio) frames each having a duration of $T_f = (\triangle f_{max}*N_f/100)*T_c = 10ms$. Each radio frame includes 10 subframes each having a duration of $T_{sf} = (\triangle f_{max}*N_f/1000)*T_c = 1ms$. There may exist one set of frames for UL and one set of frames for DL. For a numerology $\mu$, slots are numbered with $n^\mu_s \in \{0,...,N^{slot,\mu}_{subframe}-1\}$ in an increasing order in a subframe, and with $n^\mu_{s,f} \in \{0,...,N^{slot,\mu}_{frame}-1\}$ in an increasing order in a radio frame. One slot includes $N^\mu_{symb}$ consecutive OFDM symbols, and $N^\mu_{symb}$ depends on a CP. The start of a slot $n^\mu_s$ in a subframe is aligned in time with the start of an OFDM symbol $n^\mu_s*N^\mu_{symb}$ in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

In the above tables, $N^{slot}_{symb}$ represents the number of symbols in a slot, $N^{frame,\mu}_{slot}$ represents the number of slots in a frame, and $N^{subframe,\mu}_{slot}$ represents the number of slots in a subframe.

In the NR system to which various embodiments are applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

FIG. 2 illustrates an example with $\mu=2$ (i.e., an SCS of 60kHz), in which referring to Table 6, one subframe may include four slots. One subframe = {1, 2, 4} slots in FIG. 2, which is exemplary, and the number of slot(s) which may be included in one subframe is defined as listed in Table 3 or Table 4.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi co-located or quasi co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

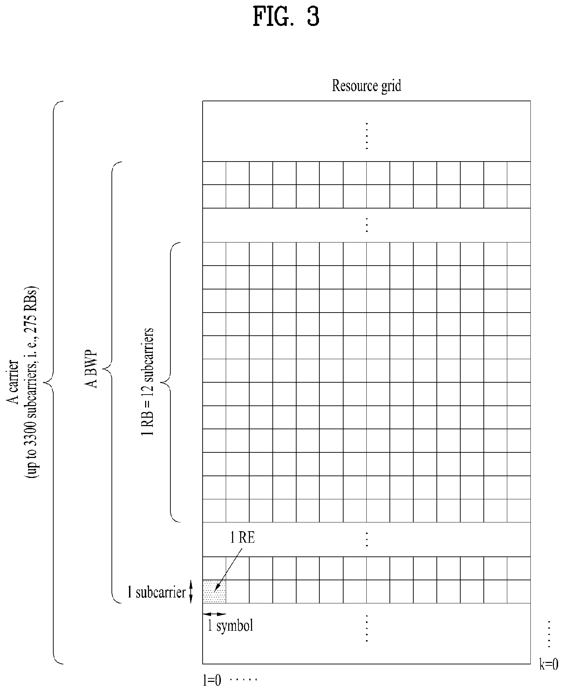

FIG. 3 illustrates an exemplary resource grid to which various embodiments are applicable.

Referring to FIG. 3, for each subcarrier spacing (SCS) and carrier, a resource grid is defined as $14 \times 2^\mu$ OFDM symbols by $N_{\mathrm{grid}}^{\mathrm{size},\mu} \times N_{\mathrm{SC}}^{\mathrm{RB}}$ subcarriers, where $N_{\mathrm{grid}}^{\mathrm{size},\mu}$ is indicated by RRC signaling from the BS. $N_{\mathrm{grid}}^{\mathrm{size},\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, 1) where k represents an index in the frequency domain, and 1 represents a symbol position in the frequency domain relative to a reference point. The RE (k, 1) for the SCS configuration $\mu$ and the antenna port p corresponds to a physical resource and a complex value $a_{k,l}^{(p,\mu)}$. An RB is defined as $N_{\mathrm{SC}}^{\mathrm{RB}} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

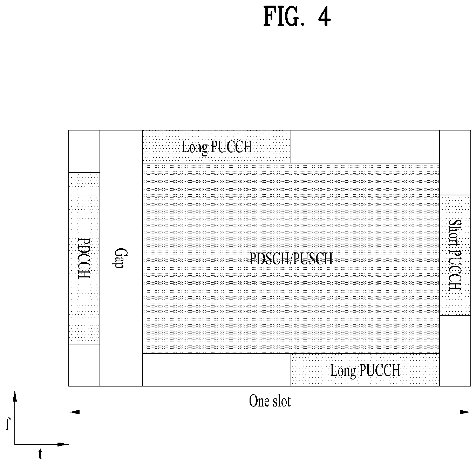

FIG. 4 is a diagram illustrating exemplary mapping of physical channels in a slot, to which various embodiments are applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

## 1.3. Radio Resource Control (RRC) States

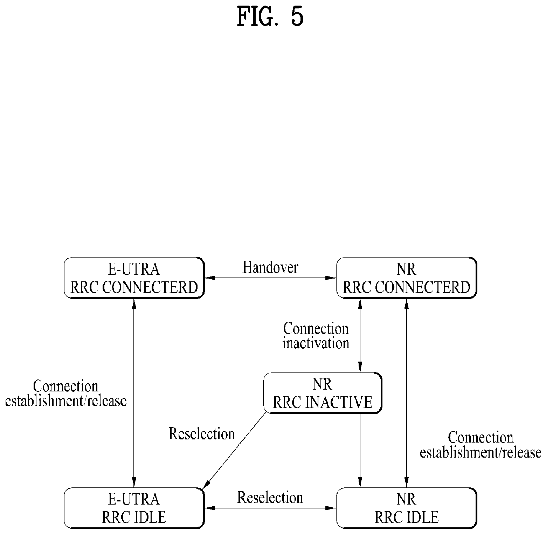

FIG. 5 is a diagram illustrating RRC states, RRC state transition, and a mobility procedure supported between an NR/next generation core (NGC) and an evolved-universal terrestrial radio access network/evolved packet core (E-UTRAN/EPC), to which various embodiments are applicable.

The UE has only one RRC state at a specific time. The RRC state indicates whether the RRC layer of the UE is logically connected to the layer of the NG radio access network (RAN). When an RRC connection has been established, the UE may be in an RRC_CONNECTED state or an RRC_INACTIVE state. When the RRC connection has not been established, the UE is in an RRC_IDLE state.

In the RRC_CONNECTED state or the RRC_INACTIVE state, the UE has an RRC connection, and accordingly, the NG RAN may recognize the existence of the UE on a cell basis. On the other hand, in the RRC_IDLE state, the UE may not be recognized by the NG RAN and is managed by a core network on a tracking area basis. A tracking area is a unit wider than a cell.

When a user initially turns on the UE, the UE searches for an appropriate cell and maintains the RRC_IDLE state in the cell. Only when the RRC_IDLE-state UE needs to establish an RRC connection, the RRC_IDLE-state UE establishes the RRC connection with the NG RAN in an RRC connection procedure, and transitions to the RRC_CONNECTED state or the RRC_INACTIVE state.

The RRC states of the UE have the following features.

(1) RRC_IDLE State

- The UE may be configured with discontinuous reception (DRX) by a higher layer.
- The mobility of the UE is controlled based on a network configuration.
- The UE monitors a paging channel.
- The UE performs neighbor cell measurement and cell (re)selection
- The UE acquires system information.

(2) RRC_INACTIVE State

- The UE may be configured with DRX by the higher layer or RRC layer.
- The mobility of the UE is controlled based on a network configuration.
- The UE stores an access stratum (AS) context.
- The UE monitors a paging channel.
- The UE performs neighbor cell measurement and cell (re)selection.
- When the UE moves outside a RAN-based notification area, the UE performs RAN-based notification area update.
- The UE acquires system information.

(3) RRC_CONNECTED State

- The UE stores an AS context.
- The UE transmits and receives unicast data.
- At a lower layer, the UE may be configured with UE-specific DRX.
- A UE supporting carrier aggregation (CA) may use one or more secondary cells (SCells) aggregated with a special cell (SpCell), for an increased bandwidth.
- A UE supporting dual connectivity (DC) may use a secondary cell group (SCG) aggregated with a master cell group (MCG), for an increased bandwidth.
- The UE monitors a paging channel.
- When data is scheduled for the UE, the UE monitors a control channel associated with a shared data channel.
- The UE provides channel quality and feedback information.

- The UE performs neighbor cell measurement and cell (re)selection.
- The UE acquires system information.

Particularly, the RRC_IDLE or RRC_INACTIVE UE may operate as described in Table 5 below.

[Table 5]

| | UE procedure |
|---|---|
| 1st step | - a public land mobile network (PLMN) selection when a UE is switched on |
| 2nd Step | - cell (re)selection for searching a suitable cell |
| 3rd Step | - tune to its control channel (camping on the cell) |
| 4th Step | - Location registration and a RAN-based Notification Area (RNA) update |

**1.4. DRX (Discontinuous Reception)**

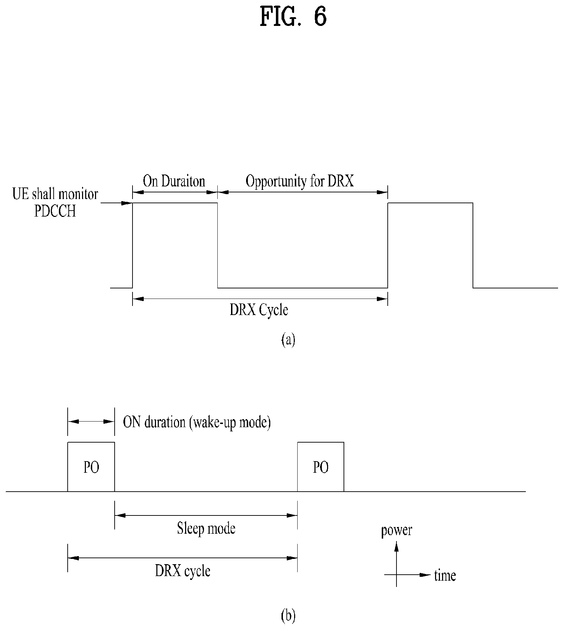

FIG. 6 is an exemplary DRX operation according to various embodiments.
According to various embodiments, the UE may perform a DRX operation in the afore-described/proposed procedures and/or methods. When the UE is configured with DRX, the UE may reduce power consumption by receiving a DL signal discontinuously. DRX may be performed in an RRC_IDLE state, an RRC_INACTIVE state, and an RRC_CONNECTED state. In the RRC_IDLE state and the RRC_INACTIVE state, DRX is used to receive a paging signal discontinuously.

RRC_CONNECTED DRX

In in the RRC_CONNECTED state, DRX is used to receive a PDCCH discontinuously. DRX in the RRC_CONNECTED state is referred to as RRC_CONNECTED DRX).
Referring to FIG. 6(a), a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep mode after the On Duration. Accordingly, when DRX is configured, the UE may perform PDCCH monitoring/reception discontinuously in the time domain in the afore-described procedures and/or methods. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain in the afore-described procedures and/or methods according to implementation(s). For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap.
Table 6 describes a DRX operation of a UE (in the RRC_CONNECTED state). Referring to Table 6, DRX configuration information is received by higher-layer signaling (e.g., RRC signaling), and DRX ON/OFF is controlled by a DRX command from the MAC layer. Once DRX is configured, the UE may perform PDCCH monitoring discontinuously the afore-described procedures and/or methods according to various embodiments.

[Table 6]

| | Type of signals | UE procedure |
|---|---|---|
| 1st step | RRC signalling (MAC-CellGroupConlig) | - Receive DRX configuration information |
| 2nd Step | MAC CE ((Long) DRX command MAC CE) | - Receive DRX command |
| 3rd Step | - | - Monitor a PDCCH during an on-durat i on of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.
- Value of drx-InactivityTimer: defines the duration of a time period during which the UE is awake after a PDCCH occasion in which a PDCCH indicating initial UL or DL data has been detected.
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-Timer-DL is running, the UE performs PDCCH monitoring in each PDCCH occasion, staying in the awake state.

RRC_IDLE DRX

In the RRC_IDLE state and the RRC_INACTIVE state, DRX is used to receive a paging signal discontinuously. For convenience, DRX performed in the RRC_IDLE (or RRC_INACTIVE) state is referred to as RRC_IDLE DRX.
Therefore, when DRX is configured, PDCCH monitoring/reception may be performed discontinuously in the time domain in the afore-described/proposed procedures and/or methods.
Referring to FIG. 5(b), DRX may be configured for discontinuous reception of a paging signal. The UE may receive DRX configuration information from the BS by higher-layer (e.g., RRC) signaling. The DRX configuration information may include a DRX cycle, a DRX offset, configuration information for a DRX timer, and the like. The UE repeats an On Duration and a Sleep duration according to a DRX cycle. The UE may operate in a wakeup mode during the On duration and in a sleep mode during the Sleep duration. In the wakeup mode, the UE may monitor a paging occasion (PO) to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) in a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information in a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the afore-described procedures and/or methods.

**1.5. Wake-up Signal (WUS)**

In a wireless communication system to which various embodiments are applicable, a WUS may be used to reduce power consumption related to paging monitoring. The WUS is a physical layer signal indicating whether a UE should monitor a paging signal (e.g., PDCCH(MTC PDCCH (MPDCCH)/narrowband PDCCH (NPDCCH) scrambled with a paging radio network temperature identifier (P-RNTI) according to a cell configuration. For a UE for which extended DRX (eDRX) is not configured (i.e., only DRX is configured), the WUS may be associated with one paging occasion (PO) (N=1). On the other hand, for a UE for which eDRX is configured, the WUS may be associated with one or more POs PO(N≥1). When the WUS is detected, the UE may monitor N POs after being associated with the WUS. On the other hand, when the WUS is not detected, the UE may maintain the sleep mode by omitting PO monitoring until the next WUS is monitored. For example, the WUS is applicable to, but not limited to, a machine type communication (MTC) system and/or a narrowband Internet of Things (NB-IoT) system. It may also be applicable to other general wireless communication systems.

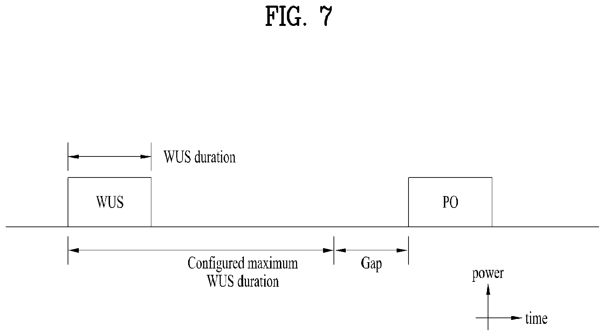

FIG. 7 is a diagram illustrating an example of a timing relationship between a WUS and a PO to which various embodiments are applicable.
The UE may receive configuration information for the WUS from the BS and monitor the WUS based on the WUS configuration information. The configuration information for the WUS may include, for example, a maximum WUS duration, the number of consecutive POs associated with the WUS, and gap information. The maximum WUS duration represents a maximum time interval in which the WUS may be transmitted, and may be represented as a proportion with respect to the maximum number of repetitions (e.g., Rmax) related to PDCCH (e.g., MPDCCH, NPDCCH). The UE may expect repetitive WUS transmission within the maximum WUS duration, but the actual number of WUS transmissions may be less than the maximum number of WUS transmissions within the maximum WUS duration. For example, for a UE within good coverage, the number of WUS repetitions may be small. For simplicity, a resource/occasion on which a WUS may be transmitted within the maximum WUS duration is referred to as a WUS resource. The WUS resource may be defined as a plurality of consecutive frequency division multiplexing (OFDM) symbols and a plurality of consecutive subcarriers. The WUS resource may be defined as a plurality of consecutive OFDM symbols in a subframe or slot and a plurality of consecutive subcarriers. For example, the WUS resource may be defined as 14 consecutive OFDM symbols and 12 consecutive subcarriers. Upon detecting the WUS, the UE skips monitoring the WUS until the first PO associated with the WUS. When the WUS is not detected for the maximum WUS duration, the UE skips monitoring the paging signal in the POs associated with the WUS (or remains in the sleep mode).

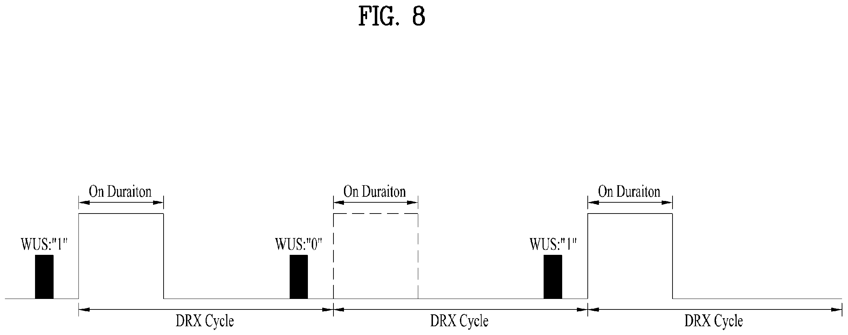

FIG. 8 is a diagram illustrating an example of WUS DCI to which various embodiments are applicable.

The DRX mechanism allows the UE to turn off a radio frequency (RF) circuit or the like for the DRX off duration, thereby reducing power consumption. However, in the case of sporadic traffic, for example, the periodic wake-up of the UE for PDCCH monitoring during DRX OnDuration may still cause power consumption.

In consideration of this issue, DCI signaling carrying a wake-up signal indication may be introduced. For example, DCI format 2_6 may be introduced. DCI signaling may include a cyclic redundancy check (CRC) scrambled with a dedicated indicator (e.g., a power saving radio network temporary identifier) for power saving. The DCI signaling may inform the UE whether to start the DRX OnDuration timer during the next DRX cycle for potential data scheduling. The UE may detect WUS DCI before DRX OnDuration. If the wake-up indication is set to 1, the UE may start the DRX OnDuration timer. Otherwise, the UE may not need to start the DRX OnDuration timer.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

### 2.1. Positioning Protocol configuration

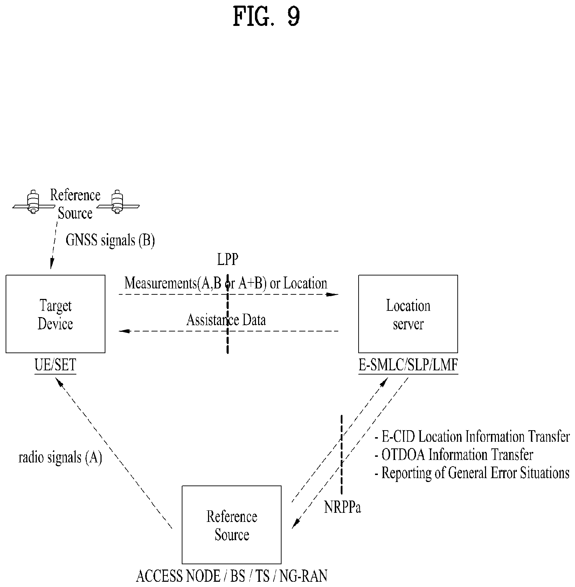

FIG. 9 is a diagram illustrating an exemplary positioning protocol configuration for positioning a UE, to which various embodiments are applicable.

Referring to FIG. 9, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

### 2.2. PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

#### Sequence generation

A PRS sequence $r(m)$ ($m$ = 0, 1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10}\big(N_{\text{symb}}^{\text{slot}} n_{\text{s,f}}^{\mu} + l + 1\big)\big(2\big(n_{\text{ID,seq}}^{\text{PRS}} \bmod 1024\big) + 1\big)\right.$$

$$\left. + \big(n_{\text{ID,seq}}^{\text{PRS}} \bmod 1024\big)\right) \bmod 2^{31}$$

$n_{\text{s,f}}^{\mu}$ may be a slot number in a frame in an SCS configuration $\mu$. A DL PRS sequence ID $n_{\text{ID,seq}}^{\text{PRS}} \in \{0,1,\ldots,4095\}$ may be given by a higher-layer parameter (e.g., DL-PRS-SequenceId). 1 may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k,l)_{p,\mu}$, specifically by Equation 3. $(k,l)_{p,\mu}$ may represent an RE (k, l) for an antenna port p and the SCS configuration $\mu$.

[Equation 3]

$$a_{k,l}^{(p,\mu)} = \beta_{\text{PRS}} \, r(m)$$

$$m = 0, 1, \ldots$$

$$k = mK_{\text{comb}}^{\text{PRS}} + \left(\big(k_{\text{offset}}^{\text{PRS}} + k'\big) \bmod K_{\text{comb}}^{\text{PRS}}\right)$$

$$l = l_{\text{start}}^{\text{PRS}}, l_{\text{start}}^{\text{PRS}} + 1, \ldots, l_{\text{start}}^{\text{PRS}} + L_{\text{PRS}} - 1$$

Herein, the following conditions may have to be satisfied:

- The REs $(k,l)_{p,\mu}$ are included in an RB occupied by a DL PRS resource configured for the UE;
- The symbol 1 not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-Resource-SymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2,4,6,12\}$ may be given by a higher-layer parameter transmission-

Comb. A combination $\{L_{\mathrm{PRS}}, K_{\mathrm{comb}}^{\mathrm{PRS}}\}$ of $L_{\mathrm{PRS}}$ and $K_{\mathrm{comb}}^{\mathrm{PRS}}$ may be one of {2, 2}, {4, 2}, {6, 2}, {12, 2}, {4, 4}, {12, 4}, {6, 6}, {12, 6} and/or {12, 12}. An RE offset $k_{\mathrm{offset}}^{\mathrm{PRS}} \in \{0, 1, \dots, K_{\mathrm{comb}}^{\mathrm{PRS}} - 1\}$ may be given by combOffset. A frequency offset $k'$ may be a function of $l - l_{\mathrm{start}}^{\mathrm{PRS}}$ as shown in Table 7.

[Table 7]

| $K_{\mathrm{comb}}^{\mathrm{PRS}}$ | Symbol number within the downlink PRS resource $l - l_{\mathrm{start}}^{\mathrm{PRS}}$ | | | | | | | | | | | |
|---|---|---|---|---|---|---|---|---|---|---|---|---|
| | 0 | 1 | 2 | 3 | 4 | 5 | 6 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-Point A-r 16.

Mapping to slots in a DL PRS resource set

A DL PRS resource included in a DL PRS resource set may be transmitted in a slot and a frame which satisfy the following Equation 4.

[Equation 4]

$$\left(N_{\mathrm{slot}}^{\mathrm{frame},\mu} n_{\mathrm{f}} + n_{\mathrm{s,f}}^{\mu} - T_{\mathrm{offset}}^{\mathrm{PRS}} - T_{\mathrm{offset,res}}^{\mathrm{PRS}}\right) \bmod 2^{\mu} T_{\mathrm{per}}^{\mathrm{PRS}} \in \left\{ i T_{\mathrm{gap}}^{\mathrm{PRS}} \right\}_{i=0}^{T_{\mathrm{rep}}^{\mathrm{PRS}}-1}$$

$N_{\mathrm{slot}}^{\mathrm{frame},\mu}$ may be the number of slots per frame in the SCS configuration $\mu$. $n_{\mathrm{f}}$ may be a system frame number (SFN). $n_{\mathrm{s,f}}^{\mu}$ may be a slot number in a frame in the SCS configuration $\mu$. A slot offset $T_{\mathrm{offset}}^{\mathrm{PRS}} \in \{0, 1, \dots, T_{\mathrm{per}}^{\mathrm{PRS}} - 1\}$ may be given by a higher-layer parameter *DL-PRS-ResourceSetSlotOffset*. A DL PRS resource slot offset $T_{\mathrm{offset,res}}^{\mathrm{PRS}}$ may be given by a higher layer parameter *DL-PRS-ResourceSlotOffset*. A periodicity $T_{\mathrm{per}}^{\mathrm{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\mathrm{rep}}^{\mathrm{PRS}} \in \{1, 2, 4, 6, 8, 16, 32\}$ may be given by a higher-layer parameter **DL-PRS-ResourceRepetitionFactor.** A muting repetition factor $T_{\mathrm{muting}}^{\mathrm{PRS}}$ may be given by a higher-layer parameter *DL-PRS-MutingBitRepetitionFactor*. A time gap $T_{\mathrm{gap}}^{\mathrm{PRS}} \in \{1, 2, 4, 8, 16, 32\}$ may be given by a higher-layer parameter *DL-PRS-ResourceTimeGap.*

**2.3. UE Positioning Architecture**

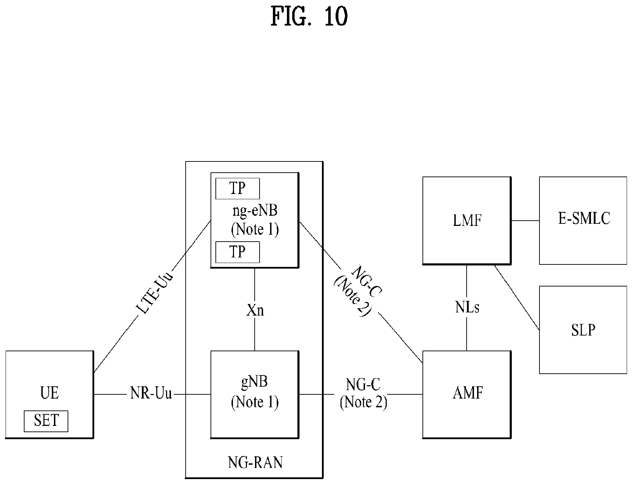

FIG. 10 illustrates an exemplary system architecture for measuring positioning of a UE to which various embodiments are applicable.

Referring to FIG. 10, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

## 2.4. Operation for UE Positioning

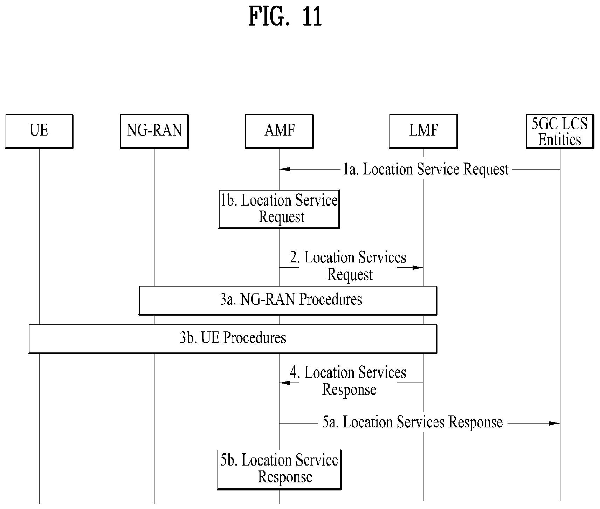

FIG. 11 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 11. In other words, in FIG. 11 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 11. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 11 has been initiated by step 1a, the AMF may transfer the location service response to a 5GC entity such as a GMLC. If the procedure of FIG. 11 has been initiated by step 1b, the AMF may use the location service response in order to provide a location service related to an emergency call.

**2.5. Positioning Protocol**

LTE Positioning Protocol (LPP)

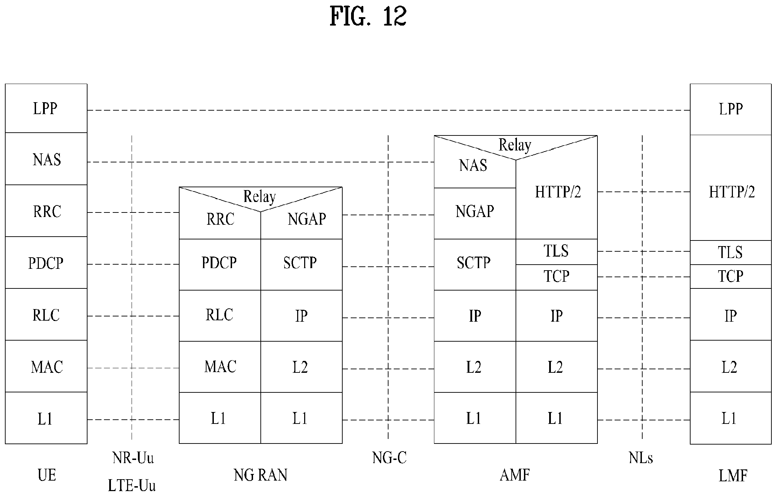

FIG. 12 illustrates an exemplary protocol layer used to support LPP message transfer between an LMF and a UE. An LPP protocol data unit (PDU) may be carried in a NAS PDU between an AMF and the UE.

Referring to FIG. 12, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

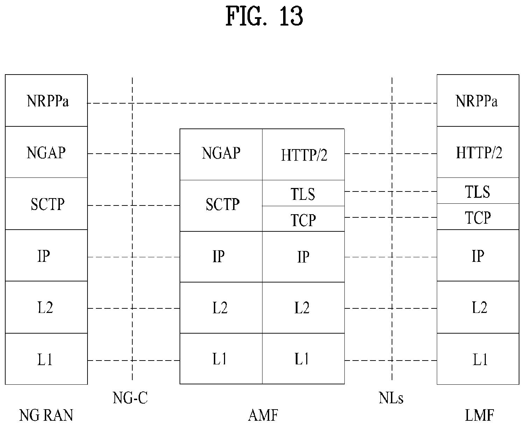

FIG. 13 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

## 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

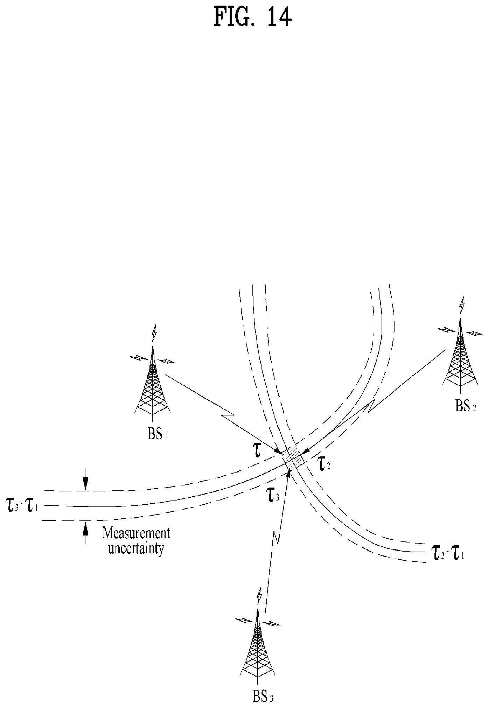

FIG. 14 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{xi, yi\}$ are coordinates of a reference TP (or another TP). Here, $(T_i - T_1)$ is a transmission time offset between two TPs, referred to as "real time differences" (RTDs), and $n_i$ and $n_1$ are UE ToA measurement error values.

<u>E-CID (Enhanced Cell ID)</u>

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance ($T_{ADV}$), and/or AoA

Here, $T_{ADV}$ may be divided into Type 1 and Type 2 as follows.

$$T_{ADV}\ \text{Type 1} = (\text{ng-eNB Rx-Tx time difference}) + (\text{UE E-UTRA Rx-Tx time difference})$$

$$T_{ADV}\ \text{Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

<u>Multi RTT (Multi-cell RTT)</u>

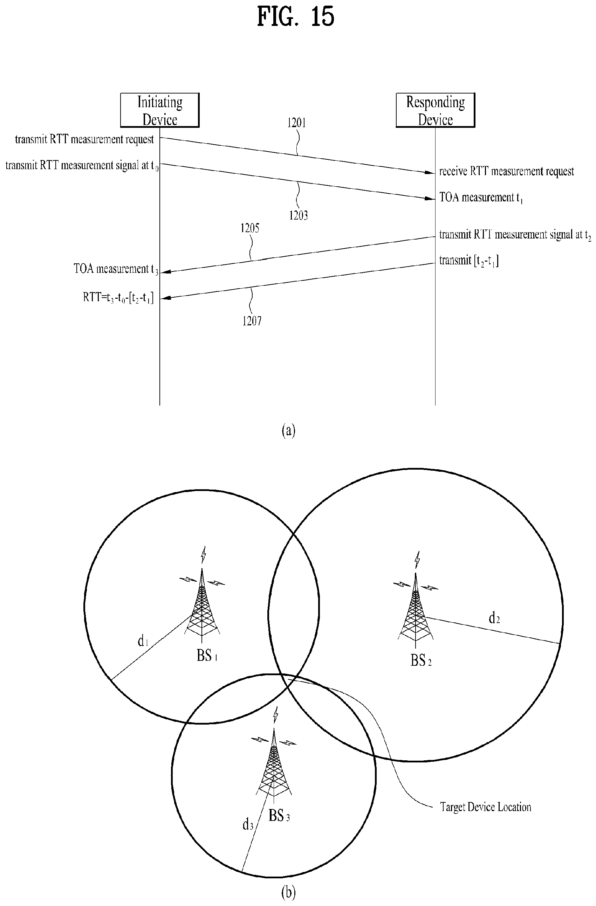

FIG. 15 is a diagram illustrating an exemplary multi-round trip time (multi-RTT) positioning method to which various embodiments are applicable.

Referring to FIG. 15(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

In operation 1301 according to various embodiments, the initiating device may transmit an RTT measurement request, and the responding device may receive the RTT measurement request.

In operation 1303 according to various embodiments, the initiating device may transmit an RTT measurement signal at t0 and the responding device may acquire a ToA measurement t1.

In operation 1305 according to various embodiments, the responding device may transmit an RTT measurement signal at t2 and the initiating device may acquire a ToA measurement t3.

In operation 1307 according to various embodiments, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$RTT = t_3 - t_0 - [t_2 - t_1]$$

Referring to FIG. 15(b), an RTT may correspond to a double-range measurement between two devices. Positioning estimation may be performed from the corresponding information, and multilateration may be used for the positioning estimation, $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered respectively.

### 2.7. Sounding Procedure

In a wireless communication system to which various embodiments are applicable, an SRS for positioning may be used.

An *SRS-Config* information element (IE) may be used to configure SRS transmission. (A list of) SRS resources and/or (a list of) SRS resource sets may be defined, and each resource set may be defined as a set of SRS resources.

The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS-ResourceSet*) and configuration information on an SRS resource for the SRS for positioning (e.g., *SRS-PosResource*) may be included separately.

An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 8 shows an exemplary SRS request field.

[Table 8]

| Value of SRS request field | Triggered aperiodic SRS resource set(s) for DCI format 0_1, 0_2, 1_1, 1_2, and 2_3 configured with higher layer parameter *srs-TPC-PDCCH-Group* set to 'typeB' | Triggered aperiodic SRS resource set(s) for DCI format 2_3 configured with higher layer parameter *srs-TPC-PDCCH-Group* set to 'typeA' |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-Resource Trigger* set to 1 or an entry in *aperiodicSRS-ResourceTriggerList* set to 1<br>SRS resource set(s) configured by *SRS-PosResourceSet* with an entry in *aperiodicSRS-Resource TriggerList* set to 1 when triggered by DCI formats 0_1, 0_2, 1_1, and 1_2 | SRS resource set(s) configured with higher layer parameter usage in SRS-*ResourceSet* set to 'antennaSwitching' and *resourceType* in SRS-*ResourceSet* set to 'aperiodic' for a 1st set of serving cells configured by higher layers |
| 10 | SRS resource set(s) configured by *SRS-ResourceSet* with higher layer parameter *aperiodicSRS-Resource Trigger* set to 2 or an entry in *aperiodicSRS-Resource TriggerList* set to 2<br>SRS resource set(s) configured by *SRS-PosResourceSet* with an entry in *aperiodicSRS-ResourceTriggerList* set to 2 when triggered by DCI formats 0_1, 0_2, 1_1, and 1_2 | SRS resource set(s) configured with higher layer parameter usage in SRS-*ResourceSet* set to 'antennaSwitching' and *resourceType* in SRS-*ResourceSet* set to 'aperiodic' for a 2nd set of serving cells configured by higher layers |

(continued)

| Value of SRS request field | Triggered aperiodic SRS resource set(s) for DCI format 0_1, 0_2, 1_1, 1_2, and 2_3 configured with higher layer parameter *srs-TPC-PDCCH-Group* set to 'typeB' | Triggered aperiodic SRS resource set(s) for DCI format 2_3 configured with higher layer parameter *srs-TPC-PDCCH-Group* set to 'typeA' |
|---|---|---|
| 11 | SRS resource set(s) configured by *SRS-ResourceSet* with higher layer parameter *aperiodicSRS-Resource Trigger* set to 3 or an entry in *aperiodicSRS-Resource TriggerList* set to 3 SRS resource set(s) configured by *SRS-PosResource* Set with an entry in *aperiodicSRS-Resource TriggerList* set to 3 when triggered by DCI formats 0_1, 0_2, 1_1, and 1_2 | SRS resource set(s) configured with higher layer parameter usage in *SRS-ResourceSet* set to 'antennaSwitching' and *resource Type* in *SRS-ResourceSet* set to 'aperiodic' for a 3rd set of serving cells configured by higher layers |

In Table 8, srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

### 3. Various Embodiments

A detailed description will be given of various embodiments based on the above technical ideas. The afore-described contents of Section 1 and Section 2 are applicable to various embodiments described below. For example, operations, functions, terminologies, and so on which are not defined in various embodiments may be performed and described based on Section 1 and Section 2.

Symbols/abbreviations/terms used in the description of various embodiments may be defined as follows.

- A/B/C: A and/or B and/or C
- CMAS: commercial mobile alert system. For example, the CMAS may be a public warning system (PWS) developed to provide multiple simultaneous warning notifications.
- ECID: enhanced cell identifier
- ETWS: earthquake and tsunami warning system. For example, the ETWS may be a public warning system developed to satisfy regulatory requirements for warning notifications related to earthquakes, tsunamis, etc. For example, ETWS alert notifications may include an ETWS primary notification (short notification) and/or an ETWS secondary notification (detailed information).
- LMF: location management function
- MAC: medium access control
- MAC-CE: MAC-control element
- NRPPa: NR positioning protocol a
- OTDOA (OTDoA): observed time difference of arrival
- PRS: positioning reference signal
- RAT: radio access technology
- RS: reference signal
- RTT: round trip time
- RSRP: reference signal received power
- RSRQ: reference signal received quality
- RSTD: reference signal time difference/relative signal time difference
- SINR: signal to interference plus noise ratio)
- SNR: signal to noise ratio
- SRS: sounding reference signal. According to various embodiments, the SRS may be used for UL channel estimation based on multi-input multi-output (MIMO) and positioning measurement. In other words, according to various embodiments, the SRS may include a normal SRS and a positioning SRS. According to various embodiments, the positioning SRS may be understood as a UL RS configured and/or used for UE positioning. According to various embodiments, the normal SRS is different from the positioning SRS. Specifically, the normal SRS may be understood as a UL RS configured and/or used for UL channel estimation (additionally or alternatively, the normal SRS may be understood as a UL RS configured and/or used for UL channel estimation and positioning). According to various embodiments, the positioning SRS may also be referred to as an SRS for positioning. In the description of various embodiments, the following terms: 'positioning SRS' and 'SRS for positioning' may be used interchangeably and understood to have the same meaning. According to various embodiments, the normal SRS may also be referred to as a legacy SRS, a MIMO SRS, an SRS for MIMO, or the like. In the description of various embodiments, the following terms: 'normal SRS', 'legacy SRS', 'MIMO SRS', and 'SRS for MIMO' may be used interchangeably and understood to have the same meaning. For example, the normal SRS and the positioning SRS may be separately configured/indicated. For example, the normal SRS and the positioning SRS may be configured/indicated by different information elements (IEs) of higher layers. For example, the normal SRS may be configured based on *SRS-resource,* and the positioning SRS may be configured based on *SRS-PosResource.* In the description of various embodiments, the positioning SRS may be understood as an exemplary UL PRS.

- SS: synchronization signal
- SSB: synchronization signal block
- SS/PBCH: synchronization signal/physical broadcast channel
- TA: timing advance/time advance
- TDOA (TDoA): timing difference of arrival
- TOA (ToA): time of arrival
- TRP: transmission and reception point (TP: transmission point)
- UTDOA (UTDoA): uplink time difference of arrival

In the description of various embodiments, a base station (BS) may be understood as a generic term including a remote radio head (RRH), an eNB, a gNB, a TP, a reception point (RP), a relay, and the like.

In the description of various embodiments, the expression 'greater than/above A' may be replaced with the expression 'above/greater than A'.

In the description of various embodiments, the expression 'less than/below B' may be replaced with the expression 'below/less than B'.

For example, in the legacy wireless communication system, overall procedures for receiving a PRS and reporting the analysis of the received PRS to the BS/server are supported only in the RRC connected state. However, since various applications such as Industrial Internet of Things (IIOT) environments are required, positioning measurement in the RRC idle/inactive state may also need to be supported.

Various embodiments may be related to methods for the UE to transmit an SRS in consideration of the cycle (DRX cycle) of periodic state transition from the idle/inactive and/or connected state to the sleep mode for power saving of the UE.

Various embodiments may be related to methods for the UE to measure its position in consideration of the cycle (DRX cycle) of periodic state transition from the idle/inactive and/or connected state to the sleep mode for power saving of the UE.

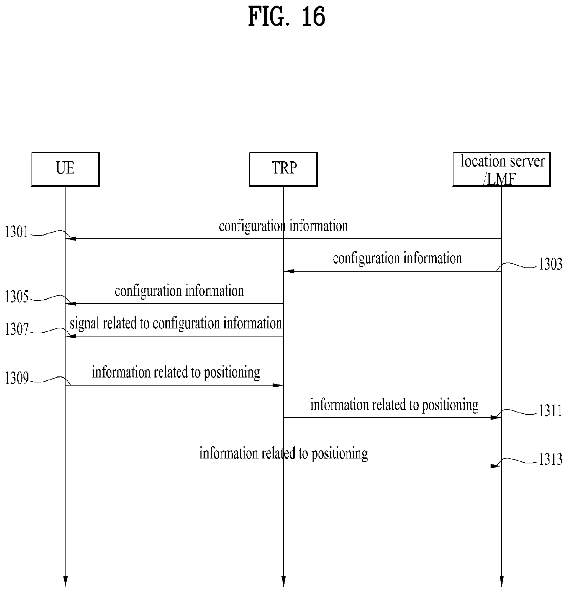

FIG. 16 is a simplified diagram illustrating an operating method of a UE, a TRP, a location server, and/or an LMF according to various embodiments.

Referring to FIG. 16, in operation 1301 according to various embodiments, the location server and/or the LMF may transmit configuration information to the UE, and the UE may receive the configuration information.

In operation 1303 according to various embodiments, the location server and/or the LMF may transmit reference configuration information to the TRP, and the TRP may receive the reference configuration information. In operation 1305 according to various embodiments, the TRP may transmit the reference configuration information to the UE, and the UE may receive the reference configuration information. In this case, operation 1301 according to various embodiments may be omitted.

In contrast, operations 1303 and 1305 according to various embodiments may be omitted. In this case, operation 1301 according to various embodiments may be performed.

That is, operation 1301 according to various embodiments, and operations 1303 and 1305 according to various embodiments may be selectively performed.

In operation 1307 according to various embodiments, the TRP may transmit a signal related to the configuration information, and the UE may receive the signal related to the configuration information. For example, the signal related to the configuration information may be a signal for positioning of the UE.

In operation 1309 according to various embodiments, the UE may transmit a signal related to positioning to the TRP, and the TRP may receive the signal related to positioning. In operation 1311 according to various embodiments, the TRP may transmit the signal related to positioning to the location server and/or the LMF, and the location server and/or the LMF may receive the signal related to positioning.

In operation 1313 according to various embodiments, the UE may transmit the signal related to positioning to the location server and/or the LMF, and the location server and/or the LMF may receive the signal related to positioning. In this case, operations 1309 and 1311 according to various embodiments may be omitted.

In contrast, operation 1313 according to various embodiments may be omitted. In this case, operations 1309 and 1311 according to various embodiments may be performed.

That is, operations 1309 and 1311 according to various embodiments, and operation 1313 according to various embodiments may be selectively performed.

According to various embodiments, the signal related to positioning may be obtained based on the configuration information and/or the signal related to the configuration information.

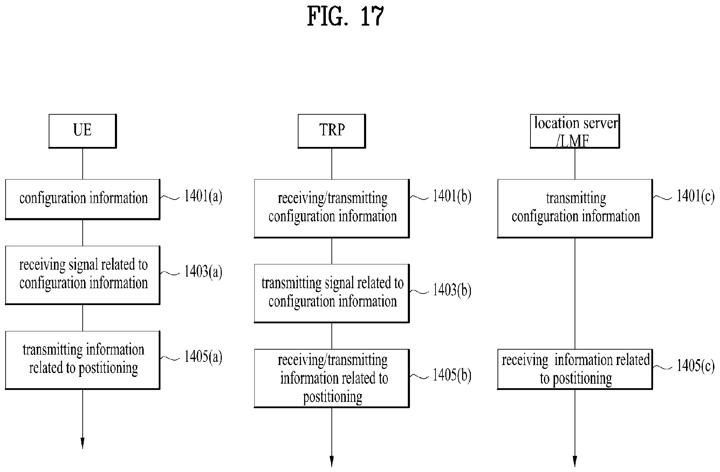

FIG. 17 is a simplified diagram illustrating an operating method of a UE, a TRP, a location server, and/or an LMF according to various embodiments.

Referring to FIG. 17(a), in operation 1401(a) according to various embodiments, the UE may receive configuration information.

In operation 1403(a) according to various embodiments, the UE may receive a signal related to the configuration information.

In operation 1405(a) according to various embodiments, the UE may transmit information related to positioning.

Referring to FIG. 17(b), in operation 1401(b) according to various embodiments, the TRP may receive configuration information from the location server and/or the LMF and transmit the configuration information to the UE.

In operation 1403(b) according to various embodiments, the TRP may transmit a signal related to the configuration information.

In operation 1405(b) according to various embodiments, the TRP may receive information related to positioning and transmit the information related to positioning to the location server and/or the LMF.

Referring to FIG. 17(c), in operation 1401(c) according to various embodiments, the location server and/or the LMF may transmit configuration information.

In operation 1405(c) according to various embodiments, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in the description of various embodiments below.

For example, the above signal related to positioning may be understood as a signal related to one or more pieces of information that the UE reports and/or a signal including one or more pieces of information that the UE reports, in the description of various embodiments below.

For example, in the description of various embodiments below, the BS, the gNB, and the cell may be replaced with the TRP, the TP, or any device serving equally as the TRP or the TP.

For example, in the description of various embodiments below, the location server may be replaced with the LMF and any device serving equally as the LMF.

More detailed operations, functions, terms, etc. in operation methods according to various embodiments may be performed and described based on various embodiments described later. The operation methods according to various embodiments are exemplary and one or more operations in the above-described operation methods may be omitted according to detailed content of each embodiment.

Hereinafter, various embodiments will be described in detail. It may be understood by those of ordinary skill in the art that the various embodiments described below may be combined in whole or in part to implement other embodiments unless mutually exclusive.

**Proposal #1 - SRS**

When the UE has no signal or data to transmit and receive for a certain period of time, the UE may perform state transition from the RRC connected state to the inactive or idle state. For example, the UE may turn off an RF module to reduce unnecessary power consumption, which may be referred to as the sleep mode. The UE may periodically drive the RF module to determine whether there is data to targeted to the UE at regular intervals.

The technology for measuring the current location of the UE and/or reporting the corresponding result may be effective for the UE currently in the RRC connected state. To this end, it may be assumed that the RF module of the UE is always on.

Considering support of positioning measurement by the UE in the RRC idle/inactive state and/or the DRX cycle in the connected state, resource configurations and transmission/reception rules for an SRS transmitted from the UE may be required. Due to the characteristics of the RRC idle/inactive state, it may be difficult to allocate resources UE-specifically and/or identify a case in whcih a plurality of UEs perform transmission on the same SRS resource.

Rules may be required in various situations such as operations of the UE and BS. Specifically, when a configured SRS resource is present within the inactive duration of the UE, a rule for determining whether SRS transmission on the resource is valid may be required. In addition, a rule may be required for the following case: although an SRS resource is predefined within a designated wake-up time (on-duration), the resource overlaps with that of a PDSCH scheduled by a PDCCH.

Various embodiments may be related to allocation of SRS transmission resources to the UE and SRS transmission of the UE in consideration of the DRX cycle. Conventional SRS resource configurations and relevant information may be directly provided to each UE through RRC signaling. The UE may generate an SRS sequence based on the corresponding information and transmit an SRS on allocated resources. However, if UEs are in the RRC idle/inactive state, it may be difficult to identify the UEs and configure resources separately. As a result, it may be difficult to support the SRS in the RRC idle/inactive state.

Various embodiments may be related to SRS resource allocation in consideration of the DRX cycle of the UE and operations of the UE and BS/server. In the description of various embodiments, the operations of the UE and BS/server may vary depending on scenarios, and the server may be a location server (and/or LMF) that manages the location of the UE.

An active time may include the configured on-duration time. Alternatively, if an inactivity timer starts and/or restarts, the active time may include up to the end of the inactivity timer. In general, the SRS configuration may be provided UE-specifically through RRC signaling, but according to various embodiments, SRS-related information may be broadcast in system information. When the UE receives information in the RRC connected state and then transitions to the RRC idle/inactive state, the UE may maintain the corresponding information, instead of deleting the information. That is, according to various embodiments, although the UE is in the RRC idle/inactive state, the UE may use SRS information, which is provided UE-specifically. In various embodiments, the SRS may be an SRS for positioning measurement and/or a normal SRS.

Additionally/alternatively, a timer and/or window for positioning may be introduced to support the positioning procedure in the inactive and/or idle state. For example, within the timer and/or window for positioning, the UE may be expected to perform SRS transmission, and the BS may be expected to perform SRS reception. Within the timer and/or window for positioning, the UE may be expected to perform PRS reception, and the BS may be expected to perform PRS transmission. The timer and/or window for positioning may be configured/indicated through signaling such as a WUS and/or paging. Details thereof will be described later.

In the description of various embodiments, the active time may include the timer and/or window for positioning. Additionally/alternatively, the active time may be replaced with the timer and/or window for positioning (and/or time defined by the timer and/or window for positioning). In the description of various embodiments, the running/on/off/end/expiration of a timer related to the active time may include the running/on/off/end/expiration of the timer and/or window for positioning. Additionally/alternatively, the running/on/off/end/expiration of the timer related to the active time may be replaced with the running/on/off/end/expiration of the timer and/or window for positioning.

In the description of various embodiments, the active time may be named as a specific time duration.

The above-described details of the active time may be commonly applied to Proposal #1 and Proposal #2 according to various embodiments.

Scenario #1: SRS is always transmitted within active time

In Scenario #1 according to various embodiments, the UE may perform SRS transmission only when a designated SRS resource is present within the active time.

Specifically, in Scenario #1 according to various embodiments, the UE may perform SRS transmission only when the SRS resource, which is configured before system information and/or before the RRC idle/inactive state, is present within the active time.

For example, when the on-duration period and/or inactivity timer is turned on, when a retransmission timer is running, and/or when a scheduling request is transmitted, the UE may perform SRS transmission if the designated SRS resource is present within the corresponding period.

Considering that the inactivity timer may start and/or restart only when the BS requests new DL and/or UL transmission, even if the SRS resource exists after the on-duration time, the UE may not be expected to perform SRS transmission because the inactive timer does not start and/or restart. Thus, according to various embodiments, the BS/server may be configured to receive the SRS from the UE by starting and/or restarting the inactivity timer after the designated on-duration time according to one or more of the following methods.

In general, connected (mode) DRX (C-DRX) may be used for the inactivity timer. However, for positioning measurement, the inactive/idle state (idle/inactive DRX) may be applied to the inactivity timer. In this case, the inactivity timer applied to the inactive/idle state may be the above-described timer and/or window for positioning, which may be commonly applied to various embodiments unless otherwise specified.

Method #1: SRS triggering based on wake-up signal

In Method #1 according to various embodiments, the BS/server may use a WUS, which may be transmitted before the on-duration time of the UE, in order to instruct the UE to transmit an SRS in an SRS resource set within the on-duration time after waking up.

According to various embodiments, the corresponding WUS may be a signal generated based on a sequence and/or a specific PDCCH. In Method #1 according to various embodiments, SRS triggering may be applied to UEs, each of which receives a UE-specific SRS configuration through RRC signaling in the RRC connected state, so that the UEs are capable of being identified.

For example, when DCI format 2-6 is used as the WUS, some bits of corresponding DCI bit fields may be used to indicate the SRS triggering. Additionally/alternatively, a new RNTI may be introduced to indicate the SRS. The new RNTI may be scrambled with a PDCCH and then used independently for the SRS triggering. For example, the corresponding RNTI may be linked/associated with the ID of the UE.

Hereinafter, DCI format 2_6 will be described. However, using DCI format 2-6 as the WUS is a specific example of various embodiments, and thus, the present disclosure is not limited to the corresponding DCI format. For example, DCI format 2_6 described above may be replaced with DCI and/or signals for the WUS, DCI and/or signals related to the WUS, and/or DCI and/or signals for performing the functions/roles of the WUS. Additionally/alternatively, DCI format 2_6 may be replaced with DCI and/or signals containing information on a wake-up indication.

In a wireless communication system (e.g., NR system, etc.) to which various embodiments are applicable, whether the UE wakes up before paging may be indicated by DCI format 2_6. DCI format 2_6 may include an indication of whether the UE wakes up (and/or an indication of maintaining a state for PDCCH monitoring and/or transitioning to the sleep mode). When it is indicated by DCI format 2_6 whether the UE wakes up before paging, the latency and/or resource overhead may be reduced.

DCI format 2_6 may be used to provide information on power saving for one or more UEs outside the DRX active time. DCI format 2_6 may have a CRC scrambled with a power saving-RNTI (PS-RNTI). DCI format 2_6 may include at least one of the following information.

- Block number 1, block number 2, ..., block number N. For example, the start position of a block may be determined for the UE configured with the block by a parameter *PSPositionDCI2-6*, which is provided by higher layers.

When the UE is configured with higher layer parameters *PS-RNTI* and *dci-Format2-6*, one block may be configured for the UE. In this case, the following fields may be defined for the corresponding block.

- Wake-up indication: One bit. For example, if the value of the corresponding bit is '0' (or '1'), it may correspond to/be mapped to 'OFF' (and/or DISABLED) (which may mean that PDCCH monitoring related to paging is not indicated and/or that the PDCCH monitoring related to paging is not performed). If the value of the corresponding bit is '1' (or '0'), it may correspond to/be mapped to 'ON' (and/or ENABLED) (which may mean that the PDCCH monitoring related to paging is indicated and/or that the PDCCH monitoring related to paging is performed).
- SCell dormancy indication: For example, if a higher layer parameter *Scell-groups-for-dormancy-outside-active-time* is not configured, the SCell dormancy indication may be zero bits. In other cases, the SCell dormancy indication may have a bitmap of 1, 2, 3, 4, or 5 bits determined by *Scell-groups-for-dormancy-outside-active-time*. For example, each bit may correspond to one of SCell groups configured by the higher layer parameter *Scell-groups-for-dormancy-outside-active-time*, and the least significant bit (LSB) to the most significant bit (MSB) of the bitmap may correspond to the first SCell group to the last SCell group among the SCell groups.

For example, the size of DCI format 2_6 may be indicated by a higher layer parameter *SizeDCI_2-6*.

Method #2: SRS triggering based on paging

In Method #2 according to various embodiments, SRS transmission may be configured/indicated by a paging PDCCH and/or PDSCH. In Method #1 according to various embodiments, a signal transmitted before the on-duration time designated to the UE may be used, but in Method #2 according to various embodiments, SRS transmission may be indicated to UEs over a PDCCH and/or PDSCH capable of being transmitted within the on-duration time.

In general, the inactivity timer may start or restart when there is new transmission in the connected state. When the UE is instructed to transmit the SRS based on Method #2 according to various embodiments, the UE may start and/or restart the inactivity timer at the end of the on-duration time. According to various embodiments, for positioning measurement, the above operation related to the inactivity timer may be applied to the idle/inactive state. A value configured for C-DRX may be used as the value of the timer value, and/or the value of the timer may be indicated/configured separately by the BS/server to the UE in the idle/inactive state. According to various embodiments, the inactivity timer applied to the inactive/idle state may correspond to the timer and/or window for positioning described above.

In the description of various embodiments, the SRS may be a positioning SRS and/or a normal SRS.

According to various embodiments, SRS transmission may be indicated by a paging PDCCH. In this case, one or more of the following methods may be considered.

Method #2-1: Reserved state in short message indicator or message

In Method #2-1 according to various embodiments, reserved states of a short message indicator may be used.

In a wireless communication system (e.g., NR system) to which various embodiments are applicable, a paging message may accommodate/include only paging record information, unlike the LTE system. For example, information on a modification/change in system information and/or information an ETWS/CMAS indication may be designated/defined/configured as a short message and then transmitted to the UE over a PDCCH (DCI).

According to various embodiments, DCI for and/or related to paging may be used for positioning measurement. For example, the corresponding DCI may be DCI including information on a short message.

In the following description, DCI format 1_0 may be taken as an example of the corresponding DCI. However, this is merely a specific example of various embodiments, and the present disclosure is not limited to the corresponding DCI format. In the description of various embodiments, DCI format 1_0 may be replaced with DCI and/or signals for paging and/or DCI and/or signals related to paging. For example, the DCI may be identified by an identifier related to the DCI and/or signals. The DCI may have a CRC scrambled with an RNTI related to paging, and the RNTI related to paging may be a P-RNTI.

In a wireless communication system to which various embodiments are applicable, a short message may have 8 bits. Details will be described with reference to Table 9. In Table 9, Bit 1 may be the MSB, and other bits may be sequential bits after the MSB.

[Table 9]

| Bit | Short Message |
|---|---|
| 1 | **systemInfoModification**<br>If set to 1: indication of a SOCH modification other than SIB6, SIB7 and SIB8. |
| 2 | **etwsAndCmasIndication**<br>If set to 1: indication of an ETWS primary notification and/or an ETWS secondary notification and/or a CMAS notification. |
| 3 | **stopPagingMonitoring**<br>This bit can be used for only operation with shared spectrum channel access and if *nrofPDCCH-MonitoringOccasionPerSSB-InPO* is present.<br>If set to 1: indication that the UE may stop monitoring PDCCH occasion(s) for paging in this Paging Occasion as specified in TS 38.304 [20], clause 7.1. |
| 4-8 | Not used in this release of the specification, and shall be ignored by UE if received. |

Bit 1 may correspond to/be mapped to systemInfoModification. For example, if Bit 1 is set to 1 (or 0), it may indicate that a broadcast control channel (BCCH) and/or SIB is changed except for SIB6, SIB7, and SIB8.

Bit 2 may correspond to/be mapped to etwsAndCmasIndication. For example, if Bit 2 is set to 1 (or 0), it may indicate ETWS primary notification, ETWS secondary notification, and/or CMAS notification.

Bit 3 may correspond to/be mapped to stopPagingMonitoring. For example, if Bit 3 is set to 1 (or 0), it may instruct the UE to stop monitoring a PDCCH occasion for paging in a corresponding PO.

Bits 4 to 8 may be reserved and/or not used. For example, when the UE receives Bits 4 to 8, the UE may ignore the received bits.

In a wireless communication system to which various embodiments are applicable, two bits may be used for a short message indicator. Details will be described with reference to Table 10.

[Table 10]

| Bit field | Short Message indicator |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

When the value of the bit field is '00', it may correspond/be mapped to a reserved state. When the value of the bit field is '01', it may correspond/be mapped to a state in which only scheduling information for paging is included in DCI. When the value of the bit field is '10', it may correspond/be mapped to a state in which only a short message is included in DCI. When the value of the bit field is '11', it may correspond/be mapped to a state in which both scheduling information for paging and a short message are included in DCI.

According to various embodiments, the BS/server/LMF may use the reserved state of '00' (i.e., reserved state corresponding to/mapped to the bit field of '00') in order to configure/indicate positioning measurement (e.g., UE-based positioning measurement) for a UE receiving DCI/paging (including the corresponding bit field) and/or multiple UEs (included in a UE-group). The configured/indicated positioning measurement may be related to a request for location information and/or request location information. Specifically, the positioning measurement may be related to the request for location information and/or function 1 of the requested location information.

According to various embodiments, the BS/server/LMF may use the reserved state of '00' (i.e., reserved state corresponding to/mapped to the bit field of '00') in order to indicate SRS transmission (on a group basis) for a UE receiving DCI/paging (including the corresponding bit field) and/or multiple UEs (included in a UE-group). According to various embodiments, the state of '00' of the short message indicator may correspond to triggering of SRS transmission.

According to various embodiments, reserved bits (at least one of Bits 4 to 8) of the short message may be used to indicate SRS triggering. According to various embodiments, at least one of Bits 4 to 8 of the short message may correspond to SRS transmission triggering. Additionally/alternatively, Bits 4 to 8 of the short message may indicate SRS transmission triggering based on SRS resources in the form of a bitmap.

According to various embodiments, when bits of the short message are used, the short message needs to be checked to determine the presence or absence of SRS triggering. Accordingly, the UE may be able to check the short message when the state of the short message indicator is '10' and/or '11'.

For example, if N bits are allocated for SRS triggering, the corresponding N bits may indicate semi-persistent transmission on N SRS resources. If three bits are allocated for SRS triggering and the value is '1' (111), there may be three SRS resources within the on-duration time. When four SRS resources adjacent in the time domain are allocated, even if there is no new transmission condition, the UE may extend the active time by turning on the inactivity timer and transmit the SRS on the four configured SRS resources.

When the UE receives a signal of '2' ('10'), the UE may extend the active time until transmitting the SRS twice even if there are no SRS resources within the on-duration time. For example, when SRS resources are allocated within the on-duration time, and/or when SRS resources are adjacent to each other continuously and/or discontinuously outside the on-duration time, the BS/server may use a PDCCH in order to instruct the UE to start and/or restart the inactivity timer and trigger SRS transmission at the same time. In this case, a predetermined value for SRS transmission may be used for the inactivity timer. Additionally/alternatively, an additional inactivity timer variable for SRS transmission may be specified, and then different values may be configured therefor. The corresponding information may be transmitted in system information or through RRC signaling. According to various embodiments, the start point of the corresponding timer may be determined based on the first symbol and/or last symbol in which the PDCCH is received. The start point of the corresponding timer may be the first symbol of an SRS resource within the on-duration time or the last symbol of the on-duration time. The corresponding timer may start and/or restart based thereon.

In the description of various embodiments, N bits may be associated with time units such as symbols/slots/subframes. The number of times of transmission as well as semi-persistent transmission of the SRS on SRS resources existing within N symbols/slots/subframes with respect to the symbol may be indicated.

According to various embodiments, when an SRS resource exists in an area overlapping with a PO, and when the resource overlap with a PDSCH and/or SSB or PDCCH, the UE may ignore the corresponding SRS resource and perform DL reception. This may be because the SRS resource may be indicated/provided in the connected state, and basically, the UE needs to perform paging reception preferentially.

Method #2-2: SRS triggering using scheduling information

Method #2-1 according to various embodiments has an advantage in terms of latency and power consumption in that there are no needs to read a PDSCH. However, in Method #2-1 according to various embodiments, since SRS triggering is performed group-specifically, it may be difficult to designate the SRS for each UE.

In Method #2-2 according to various embodiments, SRS triggering may be indicated by a PDSCH for each UE. For example, when transmitting a paging message to the UE in the idle state, the BS/server may provide not only information on the UE-ID of the target UE but also information on SRS resource configurations and/or SRS triggering

According to various embodiments, when the UE monitors a PDCCH on its own PO, and when the short message indicator includes scheduling information, the UE may check the ID of the UE stored in a paging message scheduled by the corresponding PDCCH. According to various embodiments, when the checked UE ID matches its own ID, the UE may check information on starting or restarting the inactivity timer associated with the UE and determine whether to extend the active time based on the information. According to various embodiments, the start position of the corresponding inactivity timer may be equivalent to the time described in Method #2-1 according to various embodiments and/or the first symbol or last symbol in which the PDSCH is received. In addition, the corresponding inactivity timer may start or restart based thereon.

According to various embodiments, SRS information included in scheduling information may include information on the number of times of SRS transmission, information on a window for SRS transmission, and/or information on resources for SRS transmission. According to various embodiments, the UE may transmit the SRS on an SRS resource existing within the indicated window.

When information on candidate SRSs available to candidate idle/inactive UEs is additionally provided in system information, relevant information may be provided over a PDSCH so that only a specific SRS resource set and/or resource may be used. For example, information about stacked SRS resources may be sequentially mapped to information on the indices of UE records stored in a medium access control protocol data unit (MAC PDU). For backward compatibility with UEs having lower versions, stacking may be performed after data packets of existing paging messages.

Method #3: Configuration of default UE operation depending on presence or absence of SRS resource within on-duration time

In Methods #1 and #2 according to various embodiments, the BS/server may flexibly instruct a specific UE and/or UE group(s) to perform SRS transmission within the active time for each DRX cycle over a PDCCH and/or PDSCH. Additionally/alternatively, the BS/server may provide relevant information.

In Method #3 according to various embodiments, when the UE has resource information, which is transmitted by the BS through RRC signaling, before the RRC idle/inactive state, and when a specified resource exists within the on-duration time, the UE may basically extend the active time regardless of indications.

According to various embodiments, when there is an SRS resource configured within the on-duration, the UE may extend the active time by starting and/or restarting the inactivity timer with respect to the end of the specified on-duration time and/or the start or last symbol of the SRS resource existing within the on-duration time, regardless of whether a PDCCH and/or PDSCH is received. Then, the UE may transmit the SRS on the corresponding resource.

According to various embodiments, a value used/configured for new DL/UL transmission may be used for the inactivity timer. Additionally/alternatively, a separate inactivity timer may be additionally configured and used for SRS transmission. The reason for configuring the separate inactivity timer for SRS transmission in various embodiments is to support efficient power consumption of the UE. That is, an inactivity timer used for new transmission is related to data transmission, and the inactivity timer may have a different configuration from that of SRS resources.

Scenario #1-1: Priority configuration when there is overlap with other UL signals

Scenario #1-1 according to various embodiments may be to solve the following problem. That is, since resources are commonly indicated and allocated by resource information and/or system information, which is received before the RRC idle/inactive state as described above, there may be collisions with other UL signals (e.g., PRACH/PUSCH/PUCCH) from the perspective of the UE.

In Scenario #1-1 according to various embodiments, priorities will be described from the perspective of the UE when there are collisions with other UL signals. According to various embodiments, the priorities may also include priorities related to resource (power) allocation for the UE when frequency division multiplexing (FDM) is assumed.

Method #1: PRACH > PUCCH > SRS (for positioning) > PUSCH > SRS for MIMO

In Method #1 according to various embodiments, priorities may be allocated in the following order: PRACH, PUCCH, SRS, and PUSCH.

According to various embodiments, when feedback on data received from the BS and/or DL channel measurement (CSI) are prioritized, the configuration according to Method #1 may be used.

For example, although triggering of an SRS (for positioning) is indicated to the UE based on the methods according to various embodiments described above, the UE may transmit a PUCCH if a corresponding resource overlaps with the PUCCH. When the resource overlaps with the SRS, the UE may transmit the SRS (for positioning).

Method #2: PRACH > SRS (for positioning) > PUCCH> PUSCH > SRS for MIMO

Method #2 according to various embodiments may be a priority configuration method applied when the UE is triggered with SRS transmission as described in Scenario #1.

For example, if SRS triggering is indicated over a PDCCH and/or PDSCH, the UE may transmit an SRS on an overlapping SRS resource, instead of transmitting a PUCCH and/or PUSCH including HARQ-ACK information and/or CSI.

Method #3: PRACH > PUCCH > PUSCH > SRS (for positioning) > SRS for MIMO

In Method #3 according to various embodiments, although SRS transmission is triggered to the UE as described in Scenario #1, the SRS may be configured to have the lowest priority (and more particularly, a positioning SRS may have a higher priority than a normal SRS) if the SRS overlaps with other UL signals, unlike Methods #1 and #2.

For example, when positioning measurement is supported for the UE in the RRC inactive/idle state, relatively lower accuracy may be required compared to when the UE is in the connected state. Therefore, when SRS transmission is performed on all SRS resources and/or all SRS resource sets, which are initially configured by system information, it may cause unnecessary power consumption.

Accordingly, according to various embodiments, the BS may restrictively configure/indicate SRS resources preferred by the UE in the RRC idle/inactive state over a PDSCH. For example, if a total of N resource sets are configured/designated, N bitmaps may be allocated by the PDSCH and/or PDCCH to indicate whether SRS transmission is performed for each set.

Additionally/alternatively, according to various embodiments, if M resources are allocated to each set, M bits may be allocated by a PDSCH to restrict transmission on the M resources. Since the PDSCH may contain relatively more information than the PDCCH, the corresponding resources may be directly indicated to each UE.

Scenario #2: SRS can be transmitted on inactive time

In Scenario #2 according to various embodiments, SRS transmission may be performed regardless of whether the UE is in the active or inactive state. The SRS transmission operation in Scenario #2 according to various embodiments may become an issue on the UE implementation, but the UE may be supported to perform efficient SRS transmission based on the following methods according to various embodiments.

For example, if the UE attempts SRS transmission by attempting to wake up on all designated SRS resources, it may be inefficient in terms of power consumption. Additionally/alternatively, if the periodicity of the configured SRS resources is short, power consumption may further increase. In addition, when the UE is in the RRC inactive/idle state, the location of the UE may not need to be updated frequently. Therefore, variables additionally designated by the BS/server and operations of the UE based on the variables will be described in Scenario #2 according to various embodiments in order to allow the UE to perform more efficient SRS transmission.

Method #1: Time threshold for SRS transmission

In Method #1 according to various embodiments, the BS may configure a time threshold for SRS transmission through system information. According to various embodiments, the start point of a timer based on the time threshold may be based on a time after the inactivity timer expires and/or the last symbol of the on-duration time. For example, if there is an SRS resource and/or an SRS resource set within the time threshold, the UE may transmit an SRS in the corresponding SRS resource and/or SRS resource set, regardless of whether the UE transitions to the sleep mode or maintains the active mode. According to various embodiments, the UE may perform no transmission on designated SRS resources after the configured time threshold.

Method #2: Counter information for SRS transmission

In Method #2 according to various embodiments, a limitation on the number of times of SRS transmission may be provided over a PDCCH and/or PDSCH. According to various embodiments, the UE may perform the SRS transmission as many times as the number of times, which is provided over the PDSCH and/or PDCCH and then transition to the sleep mode. Additionally/alternatively, the UE may attempt the SRS transmission as many times as the number of times by repeatedly waking up from the sleep mode, but the UE may transmit no SRS on the rest of configured resources. The method described in Scenario #1 may be applied to perform operations in Method #2 according to various embodiments.

Method #3: SRS resource configuration over PDCCH or PDSCH

In Method #3 according to various embodiments, separate SRS resources for the inactive time may be configured over the PDCCH and/or PDSCH. According to various embodiments, the separate SRS resources may be parts of SRS resources provided by system information, and/or the separate SRS resource may be new resources. According to various embodiments, relevant information may include resource information and/or period information. According to various embodiments, the UE may be expected not to attempt SRS transmission on resources except for the indicated resources.

Method #4: Window for SRS transmission

Method #4 according to various embodiments may be similar to Method #1, but in Method #4, a window for SRS transmission may be configured by the BS. According to various embodiments, corresponding information may be commonly configured by system information or configured group-specifically and/or UE-specifically over a PDCCH/PDSCH.

According to various embodiments, the window indicated by the system information may be composed of a duration and an offset indicating the start point. According to various embodiments, the start point of the corresponding offset may be applied to all UEs with respect to the last symbol of the on-duration time and/or the end of the active time.

According to various embodiments, the window provided over the PDCCH and/or PDSCH may be configured to be different for each group or each UE. According to various embodiments, upon being provided with the window, the UE may be expected to perform the SRS transmission on SRS resources existing within the window. According to various embodiments, the UE may be expected to transmit no SRS in other durations.

Regarding the window for SRS transmission and/or the number of times of SRS transmission described in various embodiments, the starting point of the corresponding duration may be within a PO, and thus, the duration may overlap with preconfigured SRS resources. According to various embodiments, when an SRS resource overlap with resources for a PDSCH/SSB/PDCCH, the UE may ignore the corresponding SRS resource and expect reception of a DL channel. Additionally/alternatively, the UE may perform reception on the DL channel. The reason for this is that the SRS resource may be indicated/provided in the connected state, and basically, the UE may first perform paging reception during the sleep mode. According to various embodiments, information on SRS transmission may be information on aperiodic transmission and/or semi-persistent information such as the window and/or the number of times. According to various embodiments, information transmitted in a paging message may also be provided in Message 2, Message 4, and/or Message B.

**Proposal #2 - PRS**

To prevent unnecessary power consumption, the UE may repeatedly perform the following operations: transitioning to the sleep mode for a certain period of time; and monitoring a PDCCH after waking up before the active time (DRX). Details will be described below.

The UE may perform the basic operation for channel measurement on measurement occasions existing within the DRX active time if there are no specific conditions. Various embodiments may be related to positioning measurement in consideration of the DRX cycle of the UE. The UE and BS/server may operate differently depending on various scenarios described later. In the description of various embodiments, the server may be a location server (and/or LMF) that manages the location of the UE.

In the description of various embodiments, the active time may include the configured on-duration time. Alternatively, if the inactivity timer starts and/or restarts, the active time may include up to the end of the inactivity timer.

Additionally/alternatively, a timer and/or window for positioning may be introduced to support the positioning procedure in the inactive and/or idle state. For example, within the timer and/or window for positioning, the UE may be expected to perform SRS transmission, and the BS may be expected to perform SRS reception. Within the timer and/or window for positioning, the UE may be expected to perform PRS reception, and the BS may be expected to perform PRS transmission. The timer and/or window for positioning may be configured/indicated through signaling such as a WUS and/or paging. Details thereof will be described later.

In the description of various embodiments, the active time may include the timer and/or window for positioning.

Additionally/alternatively, the active time may be replaced with the timer and/or window for positioning (and/or time defined by the timer and/or window for positioning). In the description of various embodiments, the running/on/off/end/expiration of a timer related to the active time may include the running/on/off/end/expiration of the timer and/or window for positioning. Additionally/alternatively, the running/on/off/end/expiration of the timer related to the active time may be replaced with the running/on/off/end/expiration of the timer and/or window for positioning

In the description of various embodiments, the active time may be named as a specific time duration.

Scenario #1: PRS is always transmitted within active time

In Scenario #1 according to various embodiments, a method by which the UE performs PRS measurement when a designated PRS resource is present within the active time will be described.

According to various embodiments, when the on-duration period and/or inactivity timer is turned on, when a retransmission timer is running, and/or when a scheduling request is transmitted, if there is a designated PRS resource, the UE may perform measurement on the corresponding PRS resource.

Considering that the inactivity timer may start and/or restart only when the BS requests new DL and/or UL transmission, even if the PRS resource exists after the on-duration time, the UE may not be expected to perform PRS reception. Thus, according to various embodiments, the BS/server may configure the UE to receive the PRS after the designated on-duration time according to one or more of the following methods.

Method #1: Extension of on-duration time based on PDCCH

In Method #1 according to various embodiments, positioning measurement may be added in addition to new transmission, which is the condition for starting and/or restarting the existing inactivity timer, so that the BS/server may extend the active time of the UE based on a PDCCH.

According to various embodiments, when PRS resources are allocated within the on-duration time, and when PRS resources are adjacent to each other continuously and/or discontinuously outside the designated on-duration time, the BS/server may use the PDCCH to configure/instruct the UE to start and/or restart the inactivity timer.

According to various embodiments, one bit in the current DCI bit field may be used to provide the corresponding indication, so that the active time of the UE may be extended. For example, when the corresponding bit field exists other than the order for new DL and/or UL transmission order (and/or when the corresponding bit field has a value indicating that PRS resources are to be measured) (for example, a first value may indicate to measure the PRS resources, and a second value may indicate not to measure the PRS resources), the UE may start and/or restart the inactivity timer to measure the PRS resources that exist after the on-duration. According to various embodiments, a predetermined value for PRS reception may be used for the inactivity timer. Additionally/alternatively, an additional inactivity timer variable for positioning measurement for PRS reception may be specified, and then different values may be configured therefor. According to various embodiments, the corresponding information may be transmitted in system information or through RRC signaling. According to various embodiments, the start point of the corresponding timer may be determined based on the first symbol in which the PDCCH is received. The start point of the corresponding timer may be determined based on the first symbol of a PRS resource within the on-duration time and/or the last symbol of the on-duration time. The corresponding timer may start and/or restart based thereon.

According to various embodiments, the corresponding bit may be used to trigger the PRS measurement of the UE. According to various embodiments, the bit may also be interpreted as an indicator indicating a report after the PRS measurement. For example, DCI transmitted on the corresponding PDCCH may have a CRC scrambled with at least one of the following: C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and/or AI-RNTI. Additionally/alternatively, the DCI may have a new DCI format having a CRC scrambled with a new RNTI.

Each RNTI may be defined as follows.

C-RNTI: unique UE identification used as an identifier of the RRC Connection and for scheduling
CI-RNTI: identification of cancellation in the uplink
CS-RNTI: unique UE identification used for Semi-Persistent Scheduling in the downlink or configured grant in the uplink
INT-RNTI: identification of pre-emption in the downlink
SFI-RNTI: identification of slot format
SP-CSI-RNTI: unique UE identification used for semi-persistent CSI reporting on PUSCH
TPC-PUCCH-RNTI: unique UE identification to control the power of PUCCH;
TPC-PUSCH-RNTI: unique UE identification to control the power of PUSCH;
TPC-SRS-RNTI: unique UE identification to control the power of SRS

AI-RNTI: identification of the DCI carrying availability indication for soft symbols of an IAB-DU

Method #2: Extension of on-duration time based on PDSCH

In Method #1 according to various embodiments, the UE in the RRC inactive/idle state may not be configured/indicated with UE-specific information due to the characteristics of a PDCCH.
In Method #2 according to various embodiments, a PDSCH may be used for a UE-specific configuration/indication, that is, in order to instruct the UE to measure a PRS after the on-duration time
For example, when the BS/server transmits a paging message to the UE in the IDLE state, the UE may provide not only information on the corresponding UE-ID but also information indicating whether start and/or restart an inactivity termer for positioning (or a timer/window for positioning). For example, if the UE monitors a PDCCH on its PO and then detects that a UE ID stored in a paging message scheduled by the PDCCH is the same as its ID, the UE may check information on the start and/or restart of the inactivity timer associated with the UD ID and then determine whether to extend the active time based on the information.
According to various embodiments, the starting position of the inactivity timer may be the first symbol and/or last symbol used for PDSCH reception in addition to the time described in the Method #1 according to the various embodiments, and the inactivity timer may start and/or restart based thereon.

Method #3: Configuration of default UE operation depending on whether there is PRS resource within on-duration time

In Methods #1 and #2 according to various embodiments, the BS/server may flexibly specify/indicate to a specific UE or specific UE group whether to extend the active time for each DRX cycle over a PDCCH or PDSCH.
In Method #3 according to various embodiments, when the BS configures PRS resources within the on-duration time via RRC signaling and/or system information, the UE may extend the active time by default. According to various embodiments, if the PRS resources are configured within the on-duration time, the UE may start and/or restart the inactivity timer to extend the active time with respect to the end of the specified on-duration time and/or the start and/or last symbol of the PRS resources within the on-duration time, regardless of whether the PDCCH and/or PDSCH is received.
According to various embodiments, a value used/configured for new DL/UL transmission may be used for the inactivity timer. Additionally/alternatively, a separate inactivity timer may be additionally configured and used for PRS transmission. The reason for configuring the separate inactivity timer for the PRS in various embodiments is to support efficient power consumption of the UE. That is, an inactivity timer used for new transmission is related to data transmission, and the inactivity timer may have a different configuration from that of PRS resources.

Scenario #1-1: PRS reception considering measurement gap

For a wireless communication system (e.g., wireless communication system supporting release 16) to which various embodiments are applicable, the UE in the RRC connected state may receive a PRS within a specified measurement gap.
However, positioning measurements may be supported in the future, regardless of the presence of the measurement gap. Therefore, a solution to problems that may occur when there is no measurement gap configuration and/or no measurement gap may be required. For example, under the prerequisites that the PRS is capable of being transmitted/received in the measurement gap, it may not need to consider collisions with other DL/UL signals.

Scenario #1-1-1: When PRS transmission is performed only within measurement gap

Method #1: Transmission of information on measurement gap when assistance data is transmitted

For example, when the UE is in the RRC connected state, the UE may transmit a preferred DRX cycle through RRC Signaling (assistance information).
In Method #1 according to various embodiments, when transmitting assistance information, the UE may include request information on a measurement gap. For example, the UE may transmit information on the measurement gap to receive the PRS within a preferred DRX cycle together with information on the corresponding DRX cycle. According to various embodiments, the information on the corresponding preferred DRX cycle and the information on the measurement gap may be directly transmitted from the UE to the location server. Additionally/alternatively, the information may be forwarded by the BS to the location server.

Method #2: Indication of measurement gap by BS via signaling

In Method #2 according to various embodiments, the BS may directly indicate activation/deactivation of a measurement gap.

For example, the BS/location server may provide information on the measurement gap where the DRX cycle and on-duration time are considered along with PRS configuration information in system information.

For example, only when the measurement gap is indicated within the on-duration time, the UE may receive a PRS.

Additionally/alternatively, when the BS transmits information on the activation/deactivation of the corresponding measurement gap over a PDCCH and/or PDSCH as described in Method #1-2 of Scenario #1, the UE may determine whether to receive the PRS depending on the information. For example, if the measurement gap is activated, the UE may perform PRS reception. If the measurement gap is deactivated, the UE may perform no PRS reception.

For example, in Scenario #1, the entire active time is extended by starting and/or restarting the inactivity timer. However, in Method #2 according to various embodiments, when PRS resources are indicated within the on-duration time, it may be promised that other DL/UL signals except for the PRS are not transmitted on the resources.

Scenario #1-1-2: When PRS transmission/reception is allowed regardless of measurement gap

In Scenario #1-1-2 according to various embodiments, PRS reception may be allowed within a duration where there is no measurement gap. In this case, previously designated PRS resources may overlap with other DL/UL signals and/or channels at the present time. This is because even though the BS preconfigures resources for PRS transmission, the BS may change the configuration of the corresponding resources when transmitting grant information on a PDCCH. Therefore, it may be necessary to define priorities between the UE and BS. In addition, when the PRS is transmitted together with another channel (PDCCH or PDSCH) based on frequency division multiplexing (FDM), the configuration of a reception (Rx) beam of the UE may need to be defined. According to various embodiments, the Rx beam configuration may be defined according to one or more of the following methods.

Alternative #1: PDCCH > PDSCH >= PRS

In Method #1 according to various embodiments, priorities for DL signals may be allocated in the following order: PDCCH, PDSCH, and PRS.

According to various embodiments, even if a PRS resource is designated within the on-duration time, the UE may expect PDCCH monitoring and perform blind decoding. The UE may expect PRS reception outside the time duration of a PDSCH scheduled by a PDCCH and expect to receive the PDSCH reception during the time duration where the PDSCH is transmitted.

However, according to various embodiments, whether the UE needs to receive the PDSCH or PRS may be dynamically indicated according to one or more of the following alternatives. Additionally/alternatively, according to various embodiments, when the PRS is transmitted together with other DL signals based on FDM, the direction of the Rx beam of the UE may be indicated according to one or more of the following alternatives.

Alternative 1.1: Indication of priority or beam direction for UE reception over PDCCH

In Alternative 1.1 according to various embodiments, a priority indication bit indicating whether to receive a PDSCH or a PRS may be additionally used based on a DCI bit field of the PDCCH. Alternatively, a preferred Rx beam indication bit may be additionally used in order to indicate an Rx beam of the UE when the PDSCH and PRS are transmitted by FDM. The reason for providing information on the Rx beam is that the PDSCH and PRS may vary depending on the configured Rx beam.

According to various embodiments, when the priority indication bit has a first value, the PRS reception may be prioritized. When the priority indication bit has a second value, the PDSCH reception may be prioritized. According to various embodiments, when the preferred Rx beam indication bit has a first value, the UE may receive the PRS only or receive the PRS and PDSCH simultaneously, depending on an Rx beam used for PDCCH and/or PDSCH reception (and/or an Rx beam associated with PDCCH and/or PDSCH resources). When the preferred Rx beam indication bit has a second value, the UE may receive the PDSCH only or receive the PDSCH and PRS simultaneously, depending on an Rx beam associated with PRS resources.

For example, if the corresponding priority indication bit of the DCI bit field is 'ON (1)' (or 0), the UE may expect the PRS reception rather than the PDSCH reception (after recognizing that data to be transmitted later is not important or assigned to its own group).

For example, when the preferred Rx beam indication bit for indicating the Rx beam of the UE is included in the DCI bit field, if the corresponding bit is '0', the UE may simultaneously receive the PDSCH and PRS on the beam used for the PDSCH and/or PDCCH reception. If the corresponding bit is '1', the UE may simultaneously receive the PDSCH and PRS on the Rx beam associated with PRS resources.

According to various embodiments, the priority indication bit and the preferred Rx beam indication bit may coexist with each other. According to various embodiments, other types of signals as well as the PDSCH may be considered and configured in the form of a bitmap. In this case, each bit may be mapped to a signal and/or channel. Each bit included in the bitmap may be mapped to a different signal and/or channel, and each bit may be indicated similarly to the above-described PDSCH example.

According to various embodiments, the UE may perform reception by giving a higher priority to a specific signal and/or channel based on the corresponding priorities (i.e., PDCCH > PDSCH > PRS) with no indications.

Alternative 1.2: Indication of priority or beam direction for UE reception over PDSCH

In Alternative 1.1 according to various embodiments, since the priority or beam direction is transmitted over a PDCCH, the priority or beam direction may be used for indication for each UE group.

In Alternative 1.2 according to various embodiments, the priority or beam direction may be transmitted/indicated UE-specifically over the PDSCH. In Alternative 1.2 according to various embodiments, a priority relationship between a DL signal and/or channel and a PRS, which are transmitted after reception, and a beam indication may be provided over the PDSCH, similarly to Alternative 1.1 according to various embodiments described above. For example, the priority relationship and beam indication may be provided by a priority indication bit, a preferred Rx beam indication bit, and/or a bitmap corresponding to each.

According to various embodiments, the UE may perform reception by giving a higher priority to a specific signal and/or channel based on the corresponding priorities (i.e., PDCCH > PDSCH > PRS) with no indications.

Alternative #2: PRS > PDCCH > PDSCH

In Alternative #2 according to various embodiments, the highest priority may be given to a PRS. In addition, according to various embodiments, when FDM is applied, a PDCCH and/or PDSCH may also be received on an Rx beam associated with a corresponding PRS resource.

For example, if positioning measurement for the UE in the RRC inactive/idle state is supported, relatively lower accuracy may be required compared to when the UE is in the connected state. Therefore, when PRS transmission is performed on all PRS resources and/or all PRS resource sets, which are initially configured by system information, it may cause unnecessary power consumption.

Accordingly, according to various embodiments, the BS may configure/indicate PRS resources preferred by the UE in the RRC idle/inactive state over a PDCCH and/or PDSCH, and the UE may measure a reduced number of candidate PRS resources depending on its state. According to various embodiments, corresponding information may be configured/indicated for each specific TRP, each specific resource set, and/or each specific resource. For example, if information on TRP #0, TRP #1, TRP #2, and TRP #3 is preferentially transmitted in a system information block for positioning (posSIB), four bitmaps may be allocated to indicate whether to measure each TRP.

Scenario #2: PRS can be transmitted on inactive time

In Scenario #2 according to various embodiments, PRS transmission may be performed regardless of whether the UE is in the active/inactive state, and the UE may perform reception on indicated PRS resources. Although the PRS reception operation in Scenario #2 according to various embodiments may become an issue on the UE implementation, the UE may be supported to perform efficient PRS reception based on the following methods according to various embodiments.

Scenario #2-1: When PRS is received only within measurement gap

Method #1: Transmission of information on measurement gap and/or presence of support over PDCCH or PDSCH

Scenario #2-1 according to various embodiments may be applied to connected mode-DRX (C-DRX).

For example, if the UE performs PRS measurement by attempting to wake up on all designated SRS resources, it may be inefficient in terms of power consumption. If the periodicity of the configured PRS resources is short, power consumption may further increase. In addition, when the UE is in the RRC inactive/idle state, the location of the UE may not need to be updated frequently. Therefore, according to various embodiments, the BS may indicate/inform that the measurement gap exists during a specific period over the PDCCH and/or PDSCH, instead of configuring the measurement gap for each of the designated PRS resource.

For example, when a predetermined measurement gap is configured outside the on-duration time and/or active time, and when a PRS resource is also configured within the corresponding duration, the BS may notify the UE that the measurement gap is designated/configured on the corresponding resource over the PDCCH.

For example, one bit in DCI may be used as an indicator. Specifically, when the predetermined measurement gap and PRS resource exist after the on-duration time, if the value of the one bit of DCI is '1' (or '0'), the UE may expect transmission on the PRS resource within the corresponding duration and perform measurement at the corresponding time point.

Additionally/alternatively, information on a measurement gap within a specific duration may be provided over the PDSCH for a case where there is a predetermined PRS resource. For example, the UE may measure the PRS in an overlapping duration by combining the predetermined PRS resource with the information on the measurement gap received over the PDSCH.

As an example, the UE may perform measurement in the corresponding duration without transitioning to the sleep mode even if the inactivity timer expires. As another example, the BS may force the UE to transition to the sleep mode by designating/configuring a time threshold in system information.

For example, when a time threshold of 3 ms is designated, if a corresponding PRS resource is at a time more than 3 ms later than a reference time point, that is, the last symbol where the inactivity timer expires and/or the first symbol where the PDCCH is monitored, the UE may transition to the sleep mode and then perform measurement on the corresponding PRS resource. On the other hand, for example, when the UE is configured with the PRS resource within a duration rather than the corresponding duration, the BS may instruct the UE to transition to the sleep mode after the inactivity timer expires, thereby saving the power of the UE.

Scenario #2-2: When PRS transmission/reception is allowed regardless of measurement gap

In Scenario #2-2 according to various embodiments, the UE may perform measurement, regardless of whether a PRS resource is included in the active time/inactive time and independently of whether a measurement gap is designated/configured.

According to various embodiments, the UE may perform PRS reception in the inactive time. In Scenario #2-2 according to various embodiments, the UE may perform measurement on the designated PRS resource even with no measurement gap, unlike Scenario #2-1.

In Scenario #2-2 according to various embodiments, the UE may be restricted to forcibly perform PRS reception during the inactive time/inactive time. However, the method described in Scenario #2-2 according to various embodiments may be related to variables additionally designated by the BS/server and operations of the UE according to the variables to allow the UE to perform efficient PRS measurement. According to various embodiments, one or more of the following methods may be applied.

Method #1: Time threshold for PRS measurement

Method #1 according to various embodiments may be similar to that described in Scenario #2-1.

According to various embodiments, the BS may basically configure a variable for the corresponding threshold in system information. According to various embodiments, a configured timer may start and/or restart with respect to a time after the inactivity timer expires. According to various embodiments, if there is a PRS resource within a time configured by the corresponding time threshold, the UE may perform the PRS measurement on the corresponding PRS resource, regardless of whether the UE transitions to the sleep mode or maintains the active mode. The UE may perform no measurement on PRS resources transmitted after the configured time threshold.

Method #2: PRS resource configuration over PDCCH or PDSCH

In Method #2 according to various embodiments, separate PRS resources for the inactive time may be configured over the PDCCH and/or PDSCH. According to various embodiments, the separate PRS resources may be parts of PRS resources provided by system information, and/or the separate PRS resource may be new resources. Additionally/alternatively, whether to perform PRS measurement may be dynamically indicated over the PDCCH and/or PDSCH as described in Scenario #1.

Method #3: Window for PRS measurement

In Method #3 according to various embodiments, the BS may configure the monitoring window for PRS measurement to the UE. According to various embodiments, the UE may expect that PRS transmission will be performed within the corresponding monitoring window. According to various embodiments, the UE may measure a PRS within the designated monitoring window.

According to various embodiments, the monitoring window may be indicated through RRC signaling or in system information regardless of the inactive/active state. The UE may expect that PRS transmission will be performed within the designated monitoring window and may not expect PRS reception in other durations.

**Details of DRX**

Hereinafter, DRX applied to Proposal #1 and Proposal #2 according to various embodiments will be described in detail.

In general, when the UE is in the idle/inactive state, the UE may repeatedly wake up and sleep every DRX cycle to receive paging. Details of the operation may be found in Table 11.

[Table 11]

The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6].

NOTE 1: If Sidelink resource allocation mode 1 is configured by RRC, a DRX functionality is not configured.

RRC controls DRX operation by configuring the following parameters:

- *drx-onDurationTimer*: the duration at the beginning of a DRX Cycle;

- *drx-SlotOffset*: the delay before starting the *drx-onDurationTimer*;

- *drx-InactivityTimer*: the duration after the PDCCH occasion in which a PDCCH indicates a new UL or DL transmission for the MAC entity;

- *drx-RetransmissionTimerDL* (per DL HARQ process except for the broadcast process): the maximum duration until a DL retransmission is received;

- *drx-RetransmissionTimerUL* (per UL HARQ process): the maximum duration until a grant for UL retransmission is received;

- *drx-LongCycleStartOffset*: the Long DRX cycle and *drx-StartOffset* which defines the subframe where the Long and Short DRX Cycle starts;

- *drx-ShortCycle* (optional): the Short DRX cycle;

- *drx-ShortCycleTimer* (optional): the duration the UE shall follow the Short DRX cycle;

- *drx-HARQ-RTT-TimerDL* (per DL HARQ process except for the broadcast process): the minimum duration before a DL assignment for HARQ retransmission is expected by the MAC entity;

- *drx-HARQ-RTT-TimerUL* (per UL HARQ process): the minimum duration before a UL HARQ retransmission grant is expected by the MAC entity;

- *ps-Wakeup* (optional): the configuration to start associated *drx-onDurationTimer* in case DCP is monitored but not detected;

- *ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started;

- *ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started.

Serving Cells may be configured by RRC in two groups. When RRC does not configure a secondary DRX group, there is only one DRX group. When two DRX groups are configured each group of Serving Cells, which is called a DRX group, is configured by RRC with its own set of parameters: *drx-onDurationTimer*, *drx-InactivityTimer*. When two DRX groups are configured, the two groups share the following parameter values: *drx-SlotOffset*, *drx-RetransmissionTimerDL*, *drx-RetransmissionTimerUL*, *drx-LongCycleStartOffset*, *drx-ShortCycle* (optional), *drx-ShortCycleTimer* (optional), *drx-HARQ-RTT-TimerDL*, and *drx-HARQ-RTT-TimerUL*.

When a DRX cycle is configured, the Active Time for Serving Cells in a DRX group includes the time while:

- *drx-onDurationTimer* or *drx-InactivityTimer* configured for the DRX group is running; or

- *drx-RetransmissionTimerDL* or *drx-RetransmissionTimerUL* is running on any Serving Cell in the DRX group; or

- *ra-ContentionResolutionTimer* (as described in clause 5.1.5) or *msgB-ResponseWindow* (as described in clause 5.1.4a) is running; or

- a Scheduling Request is sent on PUCCH and is pending (as described in clause 5.4.4); or

- a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a).

When DRX is configured, the MAC entity shall:

1> if a MAC PDU is received in a configured downlink assignment:

2> start the *drx-HARQ-RTT-TimerDL* for the corresponding HARQ process in the first symbol after the end of the corresponding transmission carrying the DL HARQ feedback;

2> stop the *drx-RetransmissionTimerDL* for the corresponding HARQ process.

1> if a MAC PDU is transmitted in a configured uplink grant and LBT failure indication is not received from lower layers:

2> start the *drx-HARQ-RTT-TimerUL* for the corresponding HARQ process in the first symbol after the end of the first repetition of the corresponding PUSCH transmission;

2> stop the *drx-RetransmissionTimerUL* for the corresponding HARQ process.

1> if a *drx-HARQ-RTT-TimerDL* expires:

2> if the data of the corresponding HARQ process was not successfully decoded:

3> start the *drx-RetransmissionTimerDL* for the corresponding HARQ process in the first symbol after the expiry of *drx-HARQ-RTT-TimerDL*.

1> if a *drx-HARQ-RTT-TimerUL* expires:

2> start the *drx-RetransmissionTimerUL* for the corresponding HARQ process in the first symbol after the expiry of *drx-HARQ-RTT-TimerUL*.

For each DRX group, the MAC entity shall:

1> if a DRX Command MAC CE or a Long DRX Command MAC CE is received:

2> stop *drx-onDurationTimer*;

2> stop *drx-InactivityTimer*.

1> if *drx-InactivityTimer* for this DRX Group expires:

2> if the Short DRX cycle is configured:

3> start or restart *drx-ShortCycleTimer* for this DRX Group in the first symbol after the expiry of *drx-InactivityTimer*;

3> use the Short DRX Cycle for this DRX group.

2> else:

3> use the Long DRX cycle for this DRX group.

1> if a DRX Command MAC CE is received:

  2> if the Short DRX cycle is configured:

    3> start or restart *drx-ShortCycleTimer* for this DRX Group in the first symbol after the end of DRX Command MAC CE reception;

    3> use the Short DRX Cycle for both DRX groups.

  2> else:

    3> use the Long DRX cycle for both DRX groups.

1> if *drx-ShortCycleTimer* for this DRX Group expires:

  2> use the Long DRX for this DRX Group cycle.

1> if a Long DRX Command MAC CE is received:

  2> stop *drx-ShortCycleTimer* for both DRX groups;

  2> use the Long DRX cycle for both DRX groups.

1> if the Short DRX Cycle is used, and [(SFN × 10) + subframe number] modulo (*drx-ShortCycle*) = (*drx-StartOffset*) modulo (*drx-ShortCycle*):

  2> start *drx-onDurationTimer* after *drx-SlotOffset* from the beginning of the subframe.

1> if the Long DRX Cycle is used, and [(SFN × 10) + subframe number] modulo (*drx-LongCycle*) = *drx-StartOffset*:

  2> if DCP monitoring is configured for the active DL BWP as specified in TS 38.213 [6], clause 10.3:

    3> if DCP indication associated with the current DRX Cycle received from lower layer indicated to start *drx-onDurationTimer*, as specified in TS 38.213 [6]; or

    3> if all DCP occasion(s) in time domain, as specified in TS 38.213 [6], associated with the current DRX Cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap; or

    3> if *ps-Wakeup* is configured with value *true* and DCP indication associated with the current DRX Cycle has not been received from lower layers:

      4> start *drx-onDurationTimer* after *drx-SlotOffset* from the beginning of the subframe.

  2> else:

    3> start *drx-onDurationTimer* after *drx-SlotOffset* from the beginning of the subframe.

NOTE 2:    In case of unaligned SFN across carriers in a cell group, the SFN of the SpCell is used to calculate the DRX duration.

1> if the DRX group is in Active Time:

  2> monitor the PDCCH on the Serving Cells in this DRX group as specified in TS 38.213 [6];

  2> if the PDCCH indicates a DL transmission:

    3> start the *drx-HARQ-RTT-TimerDL* for the corresponding HARQ process in the first symbol after the end of the corresponding transmission carrying the DL HARQ feedback;

NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback.

> 3> stop the *drx-RetransmissionTimerDL* for the corresponding HARQ process.

> 3> if the PDSCH-to-HARQ_feedback timing indicate a non-numerical k1 value as specified in TS 38.213 [6]:

>> 4> start the *drx-RetransmissionTimerDL* in the first symbol after the PDSCH transmission for the corresponding HARQ process.

> 2> if the PDCCH indicates a UL transmission:

>> 3> start the *drx-HARQ-RTT-TimerUL* for the corresponding HARQ process in the first symbol after the end of the first repetition of the corresponding PUSCH transmission;

>> 3> stop the *drx-RetransmissionTimerUL* for the corresponding HARQ process.

> 2> if the PDCCH indicates a new transmission (DL or UL) on a Serving Cell in this DRX group:

>> 3> start or restart *drx-InactivityTimer* for this DRX group in the first symbol after the end of the PDCCH reception.

1> if DCP monitoring is configured for the active DL BWP as specified in TS 38.213 [6], clause 10.3; and

1> if the current symbol n occurs within *drx-onDurationTimer* duration; and

1> if *drx-onDurationTimer* associated with the current DRX cycle is not started as specified in this clause:

> 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause:

>> 3> not transmit periodic SRS and semi-persistent SRS defined in TS 38.214 [7];

>> 3> not report semi-persistent CSI configured on PUSCH;

>> 3> if *ps-TransmitPeriodicL1-RSRP* is not configured with value *true*:

>>> 4> not report periodic CSI that is L1-RSRP on PUCCH.

>> 3> if *ps-TransmitOtherPeriodicCSI* is not configured with value *true*:

>>> 4> not report periodic CSI that is not L1-RSRP on PUCCH.

1> else:

> 2> in current symbol n, if the DRX group would not be in Active Time considering grants/assignments scheduled on Serving Cell(s) in this DRX Group and DRX Command MAC CE/Long DRX Command MAC CE received and Scheduling Request sent until 4 ms prior to symbol n when evaluating all DRX Active Time conditions as specified in this clause:

>> 3> not transmit periodic SRS and semi-persistent SRS defined in TS 38.214 [7] in this DRX group;

>> 3> not report CSI on PUCCH and semi-persistent CSI configured on PUSCH in this DRX group.

> 2> if CSI masking (*csi-Mask*) is setup by upper layers:

3> in current symbol n, if *drx-onDurationTimer* of the DRX group would not be running considering grants/assignments scheduled on Serving Cell(s) in this DRX Group and DRX Command MAC CE/Long DRX Command MAC CE received until 4 ms prior to symbol n when evaluating all DRX Active Time conditions as specified in this clause; and

4> not report CSI on this PUCCH.

NOTE 4:     If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX Group in which this PUCCH is configured, it is up to UE implementation whether to report this CSI multiplexed with other UCI(s).

Regardless of whether the MAC entity is monitoring PDCCH or not on the Serving Cells in this DRX group, the MAC entity transmits HARQ feedback, aperiodic CSI on PUSCH, and aperiodic SRS defined in TS 38.214 [7] on the Serving Cells in this DRX group when such is expected.

The MAC entity needs not to monitor the PDCCH if it is not a complete PDCCH occasion (e.g. the Active Time starts or ends in the middle of a PDCCH occasion).

6.1.3.5   DRX Command MAC CE

The DRX Command MAC CE is identified by a MAC subheader with LCID as specified in Table 6.2.1-1.

It has a fixed size of zero bits.

### 6.1.3.6 Long DRX Command MAC CE

The Long DRX Command MAC CE is identified by a MAC subheader with LCID as specified in Table 6.2.1-1.

It has a fixed size of zero bits.

**Table 6.2.1-1 Values of LCID for DL-SCH**

| Codepoint/Index | LCID values |
|---|---|
| 0 | CCCH |
| 1–32 | Identity of the logical channel |
| 33 | Extended logical channel ID field (two-octet eLCID field) |
| 34 | Extended logical channel ID field (one–octet eLCID field) |
| 35–46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

### 5.1.6 UE procedure for receiving reference signals

### 5.1.6.1 CSI-RS reception procedure

The CSI-RS defined in Clause 7.4.1.5 of [4, TS 38.211], may be used for time/frequency tracking, CSI computation, L1-RSRP computation and mobility.

For a CSI-RS resource associated with a *NZP-CSI-RS-ResourceSet* with the higher layer parameter *repetition* set to 'on', the UE shall not expect to be configured with CSI-RS over the symbols during which the UE is also configured to monitor the CORESET, while for other *NZP-CSI-RS-ResourceSet* configurations, if the UE is configured with a CSI-RS resource and a search space set associated with a CORESET in the same OFDM symbol(s), the UE may assume that the CSI-RS and a PDCCH DM-RS transmitted in all the search space sets associated with CORESET are quasi co-located with 'QCL-TypeD', if 'QCL-TypeD' is applicable. This also applies to the case when CSI-RS and the CORESET are in different intra-band component carriers, if 'QCL-TypeD' is applicable. Furthermore, the UE shall not

expect to be configured with the CSI-RS in PRBs that overlap those of the CORESET in the OFDM symbols occupied by the search space set(s).

The UE is not expected to receive CSI-RS and *SIB1* message in the overlapping PRBs in the OFDM symbols where *SIB1* is transmitted.

If the UE is configured with DRX,

- if   the UE is configured to monitor DCI format 2_6 and configured by higher layer parameter *ps-TransmitOtherPeriodicCSI* to report CSI with the higher layer parameter *reportConfigType* set to 'periodic' and *reportQuantity* set to quantities other than 'cri-RSRP' and 'ssb-Index-RSRP' when *drx-onDurationTimer* is not started, the most recent CSI measurement occasion occurs in DRX active time or during the time duration indicated by *drx-onDurationTimer* also outside DRX active time for CSI to be reported;

- if the UE is configured to monitor DCI format 2_6 and configured by higher layer parameter *ps-TransmitPeriodicL1-RSRP* to report L1-RSRP with the higher layer parameter *reportConfigType* set to 'periodic' and *reportQuantity* set to cri-RSRP when *drx-onDurationTimer* is not started, the most recent CSI measurement occasion occurs in DRX active time or during the time duration indicated by *drx-onDurationTimer* also outside DRX active time for CSI to be reported;

-      otherwise, the most recent CSI measurement occasion occurs in DRX active time for CSI to be reported.

## Discontinuous Reception for paging

The UE may use Discontinuous Reception (DRX) in RRC_IDLE and RRC_INACTIVE state in order to reduce power consumption. The UE monitors one paging occasion (PO) per DRX cycle. A PO is a set of PDCCH monitoring occasions and can consist of multiple time slots (e.g. subframe or OFDM symbol) where paging DCI can be sent (TS 38.213 [4]). One Paging Frame (PF) is one Radio Frame and may contain one or multiple PO(s) or starting point of a PO.

In multi-beam operations, the UE assumes that the same paging message and the same Short Message are repeated in all transmitted beams and thus the selection of the beam(s) for the reception of the paging message and Short Message is up to UE implementation. The paging message is same for both RAN initiated paging and CN initiated paging.

The UE initiates RRC Connection Resume procedure upon receiving RAN initiated paging. If the UE receives a CN initiated paging in RRC_INACTIVE state, the UE moves to RRC_IDLE and informs NAS.

The PF and PO for paging are determined by the following formulae:

SFN for the PF is determined by:

(SFN + PF_offset) mod T = (T div N)*(UE_ID mod N)

Index (i_s), indicating the index of the PO is determined by:

i_s = floor (UE_ID/N) mod Ns

The PDCCH monitoring occasions for paging are determined according to *pagingSearchSpace* as specified in TS 38.213 [4] and *firstPDCCH-MonitoringOccasionOfPO* and *nrofPDCCH-MonitoringOccasionPerSSB-InPO* if configured as specified in TS 38.331 [3]. When *SearchSpaceId* = 0 is configured for *pagingSearchSpace*, the PDCCH monitoring occasions for paging are same as for RMSI as defined in clause 13 in TS 38.213 [4].

When *SearchSpaceId* = 0 is configured for *pagingSearchSpace*, Ns is either 1 or 2. For Ns = 1, there is only one PO which starts from the first PDCCH monitoring occasion for paging in the PF. For Ns = 2, PO is either in the first half frame (i_s = 0) or the second half frame (i_s = 1) of the PF.

When *SearchSpaceId* other than 0 is configured for *pagingSearchSpace,* the UE monitors the (i_s + 1)$^{th}$ PO. A PO is a set of 'S*X ' consecutive PDCCH monitoring occasions where 'S' is the number of actual transmitted SSBs determined according to *ssb-PositionsInBurst* in *SIB1* and X is the *nrofPDCCH-MonitoringOccasionPerSSB-InPO* if configured or is equal to 1 otherwise. The [x*S+K]$^{th}$ PDCCH monitoring occasion for paging in the PO corresponds to the K$^{th}$ transmitted SSB, where x=0,1,...,X-1, K=1,2,...,S. The PDCCH monitoring occasions for paging which do not overlap with UL symbols (determined according to *tdd-UL-DL-ConfigurationCommon*) are sequentially numbered from zero starting from the first PDCCH monitoring occasion for paging in the PF. When *firstPDCCH-MonitoringOccasionOfPO* is present, the starting PDCCH monitoring occasion number of (i_s + 1)$^{th}$ PO is the (i_s + 1)$^{th}$ value of the *firstPDCCH-MonitoringOccasionOfPO* parameter; otherwise, it is equal to i_s * S*X. If X > 1, when the UE detects a PDCCH transmission addressed to P-RNTI within its PO, the UE is not required to monitor the subsequent PDCCH monitoring occasions for this PO.

NOTE 1:    A PO associated with a PF may start in the PF or after the PF.

NOTE 2:    The PDCCH monitoring occasions for a PO can span multiple radio frames. When *SearchSpaceId* other than 0 is configured for *paging-SearchSpace* the PDCCH monitoring occasions for a PO can span multiple periods of the paging search space.

The following parameters are used for the calculation of PF and i_s above:

T: DRX cycle of the UE (T is determined by the shortest of the UE specific DRX value(s), if configured by RRC and/or upper layers, and a default DRX value broadcast in system

information. In RRC_IDLE state, if UE specific DRX is not configured by upper layers, the default value is applied).

N: number of total paging frames in T

Ns: number of paging occasions for a PF

PF_offset: offset used for PF determination

UE_ID: 5G-S-TMSI mod 1024

Parameters *Ns, nAndPagingFrameOffset, nrofPDCCH-MonitoringOccasionPerSSB-InPO*, and the length of default DRX Cycle are signaled in *SIB1*. The values of N and PF_offset are derived from the parameter *nAndPagingFrameOffset* as defined in TS 38.331 [3]. The parameter *first-PDCCH-MonitoringOccasionOfPO* is signalled in *SIB1* for paging in initial DL BWP. For paging in a DL BWP other than the initial DL BWP, the parameter *first-PDCCH-MonitoringOccasionOfPO* is signaled in the corresponding BWP configuration.

If the UE has no 5G-S-TMSI, for instance when the UE has not yet registered onto the network, the UE shall use as default identity UE_ID = 0 in the PF and i_s formulas above.

5G-S-TMSI is a 48 bit long bit string as defined in TS 23.501 [10]. 5G-S-TMSI shall in the formulae above be interpreted as a binary number where the left most bit represents the most significant bit.

The following information is transmitted by means of the DCI format 1_0 with CRC scrambled by P-RNTI:

- Short Messages Indicator – 2 bits according to Table 7.3.1.2.1-1.

- Short Messages – 8 bits, according to Clause 6.5 of [9, TS38.331]. If only the scheduling information for Paging is carried, this bit field is reserved.

- Frequency domain resource assignment – $\left\lceil \log_2(N_{RB}^{DL,BWP}(N_{RB}^{DL,BWP}+1)/2) \right\rceil$ bits. If only the short message is carried, this bit field is reserved.

  - $N_{RB}^{DL,BWP}$ is the size of CORESET 0

- Time domain resource assignment – 4 bits as defined in Clause 5.1.2.1 of [6, TS38.214]. If only the short message is carried, this bit field is reserved.

- VRB-to-PRB mapping – 1 bit according to Table 7.3.1.2.2-5. If only the short message is carried, this bit field is reserved.

- Modulation and coding scheme – 5 bits as defined in Clause 5.1.3 of [6, TS38.214], using Table 5.1.3.1-1. If only the short message is carried, this bit field is reserved.

- TB scaling – 2 bits as defined in Clause 5.1.3.2 of [6, TS38.214]. If only the short message is carried, this bit field is reserved.

- Reserved bits –  8 bits for operation in a cell with shared spectrum channel access; otherwise 6 bits

**Table 7.3.1.2.1-1: Short Message indicator**

| Bit field | Short Message indicator |
|---|---|
| 00 | Reserved |
| 01 | Only scheduling information for Paging is present in the DCI |
| 10 | Only short message is present in the DCI |
| 11 | Both scheduling information for Paging and short message are present in the DCI |

Short Message

Short Messages can be transmitted on PDCCH using P-RNTI with or without associated *Paging* message using Short Message field in DCI format 1_0 (see TS 38.212 [17], clause 7.3.1.2.1).

Table 6.5-1 defines Short Messages. Bit 1 is the most significant bit.

**Table 6.5-1: Short Messages**

| Bit | Short Message |
|---|---|
| 1 | ***systemInfoModification*** <br> If set to 1: indication of a BCCH modification other than SIB6, SIB7 and SIB8. |
| 2 | ***etwsAndCmasIndication*** <br> If set to 1: indication of an ETWS primary notification and/or an ETWS secondary notification and/or a CMAS notification. |
| 3 | ***stopPagingMonitoring*** <br> This bit can be used for only operation with shared spectrum channel access and if *nrofPDCCH-MonitoringOccasionPerSSB-InPO* is present. <br> If set to 1: indication that the UE may stop monitoring PDCCH occasion(s) for paging in this Paging Occasion as specified in TS 38.304 [20], clause 7.1. |
| 4 – 8 | Not used in this release of the specification, and shall be ignored by UE if received. |

As described above, a timer and/or window for positioning may be introduced to support the positioning procedure in the inactive and/or idle state. For example, within the timer and/or window for positioning, the UE may be expected to perform SRS transmission, and the BS may be expected to perform SRS reception. Within the timer and/or window for positioning, the UE may be expected to perform PRS reception, and the BS may be expected to perform PRS transmission.

In the description of various embodiments, the active time may include the timer and/or window for positioning. Additionally/alternatively, the active time may be replaced with the timer and/or window for positioning (and/or time defined by the timer and/or window for positioning). Hereinafter, the timer and/or window for positioning will be described in relation to PRS measurement. Although the present disclosure is described based on the PRS measurement, the present disclosure may also be applied to SRS transmission in a similar way.

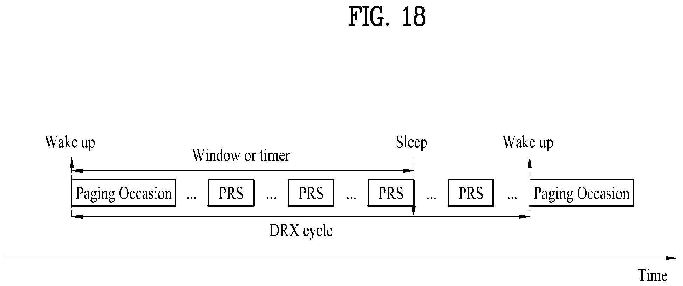

FIG. 18 is a diagram illustrating exemplary PRS measurement of an RRC idle/inactive UE according to various embodiments.

For example, when the UE is in the idle/inactive state, the UE may be configured with a DRX cycle through RRC signaling or in system information. In this case, the configured DRX cycle may be generally longer than the periodicity of a PRS. For example, the PRS periodicity may be configured in units of slots, and the DRX cycle may be configured in units of radio frames (e.g., 32, 64, 128, or 256 radio frames when it is transmitted in the system information).

Thus, multiple PRSs may be transmitted/received between POs. However, it may be inefficient for the UE to monitor all configured PRSs in terms of power consumption. Accordingly, the BS/server may need to instruct/configure the UE to measure only specific PRSs and then transition to the sleep mode again. This may also reduce the transmission burden on the BS.

To this end, according to various embodiments, the above-described window and/or timer in the connected state such as C-DRX may also be applied when the UE is in the idle/inactive state. For example, the UE may be configured with the timer in system information or through RRC signaling and/or over a PDCCH/PDSCH. Referring to FIG. 18, the UE may maintain the wake-up state until a PRS existing within the indicated/configured window and/or timer, measure the PRS, and transition to the sleep mode. For example, the UE may not perform measurement for a PRS outside the indicated/configured window and/or timer.

According to various embodiments, the UE operation within the configured window and/or timer may be determined by default or be separately indicated as group-specifically and/or UE-specifically over the above-described paging PDCCH and/or PDSCH.

According to various embodiments, when the UE operation is indicated group-specifically, reserved states of a short message indicator may be used, and/or reserved bits (at least some thereof) of a short message may be used to provide/indicate the UE operation.

For example, if corresponding information is included in the form of ON/OFF in the short message, the short message indicator may have the same value as when it has a state (e.g., '10' or '11') for short message transmission.

According to various embodiments, when it is provided over a PDSCH to each UE, the one-bit information for indicating ON/OFF, window, and/or timer may be separately indicated in addition to the UE-ID in the paging message. For example, when the PDSCH is used, a DCI bit field in the short message indicator may have a value representing only scheduling information ('01') and/or a value representing a state ('11') including both the short message and PDSCH (scheduling information).

According to various embodiments, N bits may be used to indicate the window and/or timer. Specifically, the window and/or timer may be indicated as follows: 2^N symbols, 2^N slots, 2^N subframes, or 2^N ms. Additionally/alternatively, according to various embodiments, the window and/or timer may be directly indicated to each UE in paging records, such as N symbols, N slots, N subframes, and N ms. According to various embodiments, the corresponding N bits may be designated group-specifically using the reserved bits of the short message.

According to various embodiments, the starting point of the window and/or timer may be the symbol of a first PDCCH monitored by the UE on a PO (and/or the start symbol of the PO), or the starting point may be a symbol immediately before the UE transitions to the sleep mode (and/or the last symbol of the PDSCH).

For example, if the start of the corresponding window and/or timer becomes the symbol of the first PDCCH and/or the start symbol of the PO, the window and/or timer may collide with other DL channels (e.g., SSB, PDCCH, PDSCH, etc.) within a duration overlapping the PO. In this case, the UE may be configured to give the lowest priority to the PRS in the overlapping duration and perform monitoring the PRS in non-overlapping durations by giving the highest priority to the PRS.

Alternatively, according to various embodiments, when the BS transmits paging-related information, the BS may configure/indicate a separate monitoring window for PRS measurement.

For example, the PRS monitoring window may be configured/indicated together with the DRX configuration. That is, the UE may wake up during the configured PRS monitoring window, measure the PRS, and transition to the sleep mode at the end of the corresponding window. Additionally/alternatively, the UE may expect no PRS measurement in a duration overlapping with the PO so that the UE may monitor paging in the corresponding duration.

According to various embodiments, the corresponding window may be configured based on the PO and/or regardless of the PO.

For example, when the window is configured with respect to the PO, the periodicity of the window may follow the DRX cycle, and the window may be indicated with a duration and an offset of M symbols/slots/subframes relative to the PO.

For example, when the window is configured regardless of the PO, the BS may configure/indicate to the UE the periodicity and duration of the window in system information or through RRC signaling, similarly to the PO configuration.

For example, when the monitoring window is configured/indicated regardless of the PO, the BS/server may configured/indicate to the UE a time between the start symbol of the monitoring window configured for power saving of the UE and the last symbol of the PO and/or the last symbol of the paging message. For example, the configured time may mean control of the UE operation related to monitoring is controlled. For example, if the starting point of the monitoring window exceeds or is greater than or equal to the indicated value, the UE may not expect PRS measurement in the corresponding monitoring window.

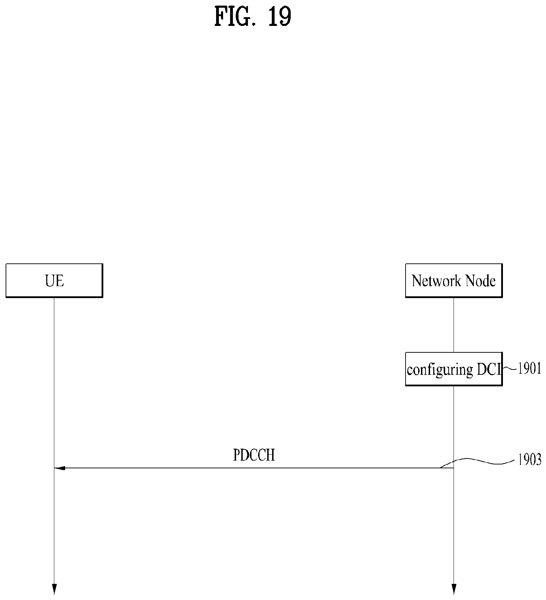

FIG. 19 is a diagram schematically illustrating a method of operating a UE and a network node according to various embodiments.

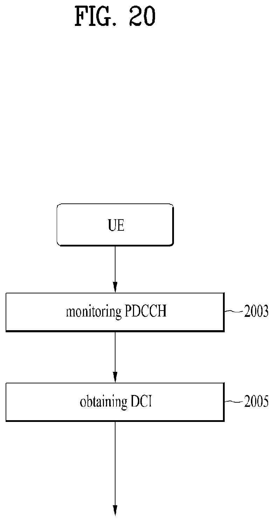

FIG. 20 is a flowchart illustrating a method of operating a UE according to various embodiments.

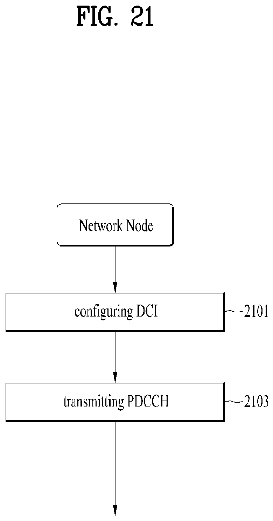

FIG. 21 is a flowchart illustrating a method of operating a network node according to various embodiments. For example, the network node may be a TP, a BS, a cell, a location server, an LMF, and/or any device performing the same work.

Referring to FIGS. 19 to 21, in operations 1901 and 2101 according to various embodiments, the network node may configure/generate/obtain DCI.

In operations 1903, 2003, 2005, and 2103 according to various embodiments, the network node may transmit a PDCCH including the DCI, and the UE may perform PDCCH monitoring and obtain the DCI based on the PDCCH monitoring.

Specific operations of the UE and/or the network node according to the above-described various embodiments may be described and performed based on Section 1 to Section 3 described before.

Since examples of the above-described proposal method may also be included in one of implementation methods of the various embodiments, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal).

## 4. Exemplary Configurations of Devices Implementing Various embodiments

### 4.1. Exemplary configurations of devices to which various embodiments are applied

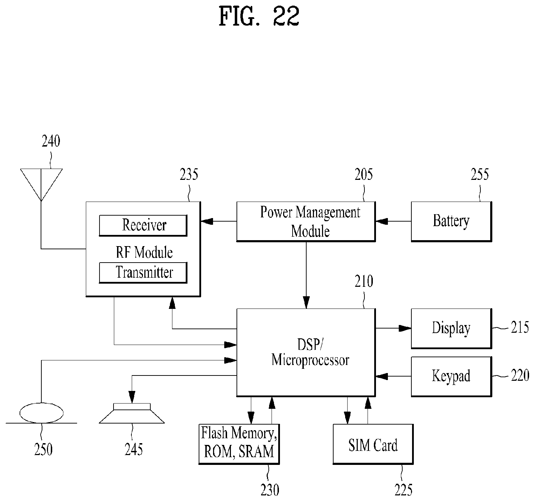

FIG. 22 is a diagram illustrating a device that implements various embodiments.

The device illustrated in FIG. 22 may be a UE and/or a BS (e.g., eNB or gNB or TP) and/or a location server (or LMF) which is adapted to perform the above-described mechanism, or any device performing the same operation.

Referring to FIG. 22, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer, s selection.

Particularly, FIG. 22 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 22 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to various embodiments, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to various embodiments, the at least one processor included in the UE (or at least one processor of the communication device included in the UE) may be configured to: perform PDCCH monitoring; and obtain DCI from a PDCCH related to paging monitored based on the PDCCH monitoring.

According to various embodiments, based on specific N bits included in the DCI, the UE may be instructed to transmit an SRS for positioning, where N may be a natural number.

According to various embodiments, the at least one processor included in the network node (or at least one processor of the communication device included in the network node) may be configured to: configure DCI related to paging; and transmit a PDCCH including the DCI.

According to various embodiments, based on specific N bits included in the DCI, a UE may be instructed to transmit an SRS for positioning, where N may be a natural number.

Specific operations of the UE and/or the network node according to the above-described various embodiments may be described and performed based on Section 1 to Section 3 described before.

Unless contradicting each other, various embodiments may be implemented in combination. For example, (the processor included in) the UE and/or the network node according to various embodiments may perform operations in combination of the embodiments of the afore-described in Section 1 to Section 3, unless contradicting each other.

**4.2. Example of communication system to which various embodiments are applied**

Various embodiments have been mainly described in relation to data transmission and reception between a BS and a UE in a wireless communication system. However, various embodiments are not limited thereto. For example, various embodiments may also relate to the following technical configurations.

The various descriptions, functions, procedures, proposals, methods, and/or operational flowcharts of the various embodiments described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

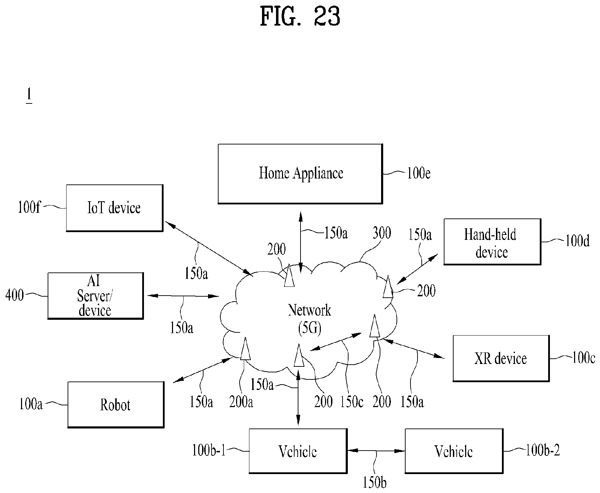

FIG. 23 illustrates an exemplary communication system to which various embodiments are applied.

Referring to FIG. 23, a communication system 1 applied to the various embodiments includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the various embodiments.

<u>Example of wireless devices to which various embodiments are applied</u>

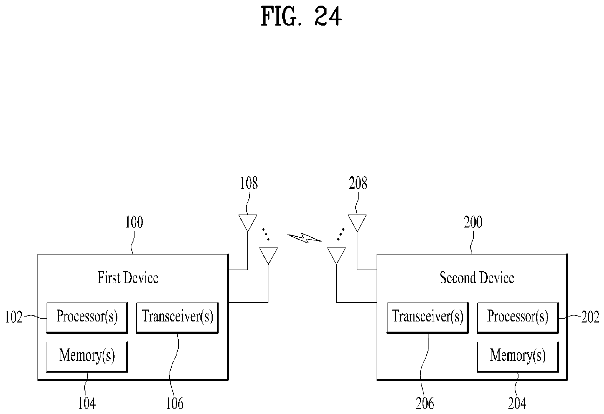

FIG. 24 illustrates exemplary wireless devices to which various embodiments are applicable.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the various embodiments, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the various embodiments, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments, one or more memories (e.g., 104 or 204) may store instructions or programs which, when executed, cause one or more processors operably coupled to the one or more memories to perform operations according to various embodiments or implementations of the present disclosure.

According to various embodiments, a computer-readable storage medium may store at least one instruction or computer programs which, when executed by one or more processors, cause the one or more processors to perform operations according to various embodiments or implementations of the present disclosure.

According to various embodiments, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations of the present disclosure.

Example of using wireless devices to which various embodiments are applied

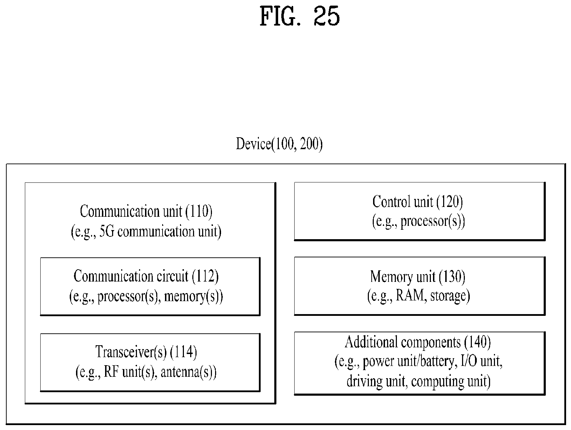

FIG. 25 illustrates other exemplary wireless devices to which various embodiments are applied. The wireless devices may be implemented in various forms according to a use case/service (see FIG. 23).

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a Fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

Example of portable device to which various embodiments are applied

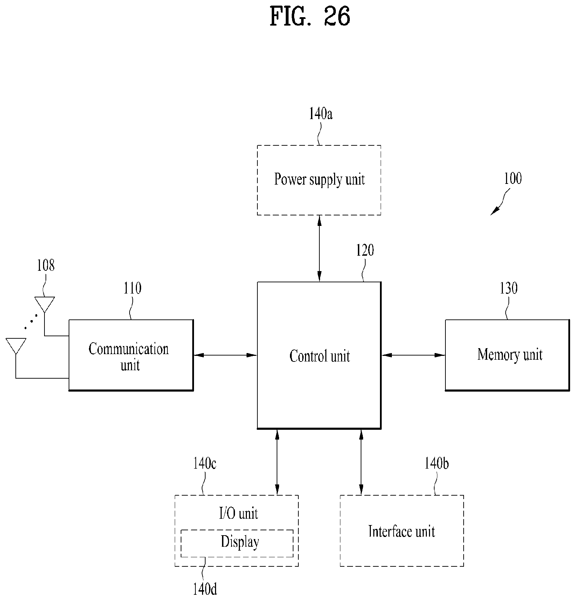

FIG. 26 illustrates an exemplary portable device to which various embodiments are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which various embodiments.

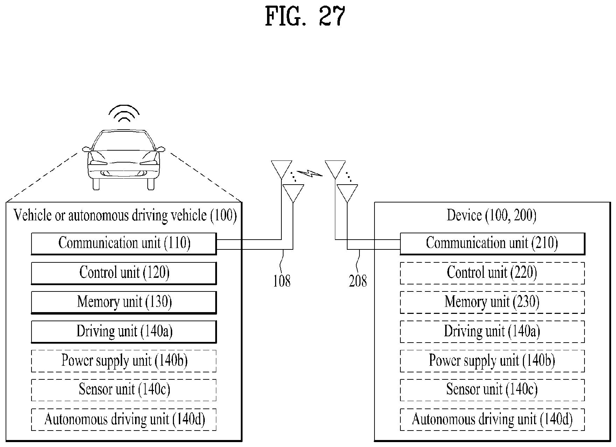

FIG. 27 illustrates an exemplary vehicle or autonomous driving vehicle to which various embodiments. The vehicle or autonomous driving vehicle may be implemented as a mobile robot, a car, a train, a manned/unmanned aerial vehicle (AV), a ship, or the like.

Referring to FIG. 27, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, various embodiments may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments may be implemented in various means. For example, various embodiments may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the various embodiments may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the various embodiments may be carried out in other specific ways than those set forth herein without departing from the spirit and essential characteristics of the various embodiments. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

## INDUSTRIAL APPLICABILITY

The various embodiments are applicable to various wireless access systems including a 3GPP system, and/or a 3GPP2 system. Besides these wireless access systems, the various embodiments are applicable to all technical fields in which the wireless access systems find their applications. Moreover, the proposed method can also be applied to mmWave communication using an ultra-high frequency band.

## Claims

1. A method performed by a user equipment (UE) in a wireless communication system, the method comprising:

   performing physical downlink control channel (PDCCH) monitoring; and
   obtaining downlink control information (DCI) from a PDCCH related to paging monitored based on the PDCCH monitoring,
   wherein based on specific N bits included in the DCI, the UE is instructed to transmit a sounding reference signal (SRS) for positioning, where N is a natural number.

2. The method of claim 1, wherein the specific N bits correspond to a first bit field included in the DCI,

   wherein based on the first bit field having a first value, the first bit field indicates that the UE is to transmit the SRS for the positioning, and
   wherein based on the first bit field having a second value, the first bit field indicates that the DCI comprises scheduling information for the paging.

3. The method of claim 1, wherein the DCI comprises a second bit field related to a short message,

   wherein the short message comprises: (i) information on a system information modification; and (ii) information on an indication of at least one of an earthquake and tsunami warning system (ETWS) or a commercial mobile alert system (CMAS),
   wherein a most significant bit (MSB) of the second bit field comprises the information on the system information modification,
   wherein a second MSB of the second bit field comprises the information on the indication of the at least one of the ETWS or the CMAS,
   wherein a third MSB of the second bit field comprises information on whether the PDCCH monitoring for the PDCCH related to the paging is terminated, and
   wherein based on the specific N bits, which are at least parts of remaining bits except for the MSB, the second MSB, and the third MSB among bits included in the second bit field, the UE is instructed to transmit the SRS for the positioning.

4. The method of claim 3, wherein the specific N bits, which are the at least parts of the remaining bits, indicate a time resource for transmitting the SRS in a bitmap form in units of one of symbols, slots, or subframes.

**5.** The method of claim 1, wherein based on that a time window for the positioning is configured, and that a time resource for transmitting the SRS is included within the time window, the SRS is transmitted, and wherein based on that the time window for the positioning is configured, and that the time resource for transmitting the SRS is not included in the time window, the SRS is not transmitted.

**6.** The method of claim 1, wherein for a UE group consisting of a plurality of UEs including the UE, the specific N bits group-specifically instruct the plurality of UEs to transmit the SRS for the positioning.

**7.** The method of claim 1, wherein the DCI has a cyclic redundancy check (CRC) scrambled with a radio network temporary identifier (RNTI) related to the paging.

**8.** A user equipment (UE) configured to operate in a wireless communication system, the UE comprising:

a transceiver; and
at least one processor connected to the transceiver,
wherein the at least one processor is configured to:

perform physical downlink control channel (PDCCH) monitoring; and
obtain downlink control information (DCI) from a PDCCH related to paging monitored based on the PDCCH monitoring, and
wherein based on specific N bits included in the DCI, the UE is instructed to transmit a sounding reference signal (SRS) for positioning, where N is a natural number.

**9.** The UE of claim 8, wherein the specific N bits correspond to a first bit field included in the DCI,

wherein based on the first bit field having a first value, the first bit field indicates that the UE is to transmit the SRS for the positioning, and
wherein based on the first bit field having a second value, the first bit field indicates that the DCI comprises scheduling information for the paging.

**10.** The UE of claim 8, wherein the DCI comprises a second bit field related to a short message,

wherein the short message comprises: (i) information on a system information modification; and (ii) information on an indication of at least one of an earthquake and tsunami warning system (ETWS) or a commercial mobile alert system (CMAS),
wherein a most significant bit (MSB) of the second bit field comprises the information on the system information modification,
wherein a second MSB of the second bit field comprises the information on the indication of the at least one of the ETWS or the CMAS,
wherein a third MSB of the second bit field comprises information on whether the PDCCH monitoring for the PDCCH related to the paging is terminated, and
wherein based on the specific N bits, which are at least parts of remaining bits except for the MSB, the second MSB, and the third MSB among bits included in the second bit field, the UE is instructed to transmit the SRS for the positioning.

**11.** The UE of claim 8, wherein the at least one processor is configured to communicate with at least one of a mobile terminal, a network, or an autonomous vehicle other than a vehicle comprising the UE.

**12.** A method performed by a base station in a wireless communication system, the method comprising:

configuring downlink control information (DCI) related to paging; and
transmitting a physical downlink control channel (PDCCH) comprising the DCI,
wherein based on specific N bits included in the DCI, a user equipment (UE) is instructed to transmit a sounding reference signal (SRS) for positioning, where N is a natural number.

**13.** A base station configured to operate in a wireless communication system, the base station comprising:

a transceiver; and

at least one processor connected to the transceiver,
wherein the at least one processor is configured to:

configure downlink control information (DCI) related to paging; and
transmit a physical downlink control channel (PDCCH) comprising the DCI,
wherein based on specific N bits included in the DCI, a user equipment (UE) is instructed to transmit a
sounding reference signal (SRS) for positioning, where N is a natural number.

14. An apparatus configured to operate in a wireless communication system, the apparatus comprising:

at least one processor; and
at least one memory operably connected to the at least one processor and configured to store one or more
instructions that, based on execution, cause the at least one processor to perform operations comprising:

performing physical downlink control channel (PDCCH) monitoring; and
obtaining downlink control information (DCI) from a PDCCH related to paging monitored based on the
PDCCH monitoring,
wherein based on specific N bits included in the DCI, the UE is instructed to transmit a sounding reference
signal (SRS) for positioning, where N is a natural number.

15. A non-transitory processor-readable medium configured to store one or more instructions that cause at least one
processor to perform operations comprising:

performing physical downlink control channel (PDCCH) monitoring; and
obtaining downlink control information (DCI) from a PDCCH related to paging monitored based on the PDCCH
monitoring,
wherein based on specific N bits included in the DCI, the UE is instructed to transmit a sounding reference
signal (SRS) for positioning, where N is a natural number.

FIG. 1

Initial Cell Search

System Information
Reception

Random Access Procedure

General DL/UL Tx/Rx

S11 — P/S - SCH & [DLRS] & PBCH

S12 — PDCCH/ PDSCH (BCCH)

S13 — PRACH

S14 — PDCCH/ PDSCH

S15 — PRACH

S16 — PDCCH/ PDSCH

S17 — PDCCH/ PDSCH

S18 — PUSCH/ PUCCH

· DL/UL ACK/NACK
· UE CQI/PMI/Rank Report using PUSCH and PUCCH

# FIG. 2

# FIG. 3

Resource grid

A carrier
(up to 3300 subcarriers, i. e., 275 RBs)

A BWP

1 RB = 12 subcarriers

1 RE

1 subcarrier

1 symbol

l=0 · · · · ·

k=0

# FIG. 4

# FIG. 5

# FIG. 6

(a)

(b)

FIG. 7

FIG. 8

EP 4 228 191 A1

On Duraiton

WUS:"1"

DRX Cycle

On Duraiton

WUS:"0"

DRX Cycle

On Duraiton

WUS:"1"

DRX Cycle

# FIG. 9

Reference Source

GNSS signals (B)

LPP

Measurements(A,B or A+B) or Location

Assistance Data

Target Device

UE/SET

Location server

E-SMLC/SLP/LMF

radio signals (A)

Reference Source

ACCESS NODE / BS / TS / NG-RAN

NRPPa

- E-CID Location Information Transfer
- OTDOA Information Transfer
- Reporting of General Error Situations

EP 4 228 191 A1

# FIG. 10

# FIG. 11

# FIG. 12

UE — NR-Uu / LTE-Uu — NG RAN — NG-C — AMF — NLs — LMF

UE stack: LPP, NAS, RRC, PDCP, RLC, MAC, L1

NG RAN stack: Relay — RRC / NGAP, PDCP / SCTP, RLC / IP, MAC / L2, L1 / L1

AMF stack: Relay — NAS / HTTP/2, NGAP, SCTP / TLS, TLS / TCP, IP / IP, L2 / L2, L1 / L1

LMF stack: LPP, HTTP/2, TLS, TCP, IP, L2, L1

EP 4 228 191 A1

## FIG. 13

NG RAN    NG-C    AMF    NLs    LMF

EP 4 228 191 A1

# FIG. 14

# FIG. 15

(a)

(b)

FIG. 16

| UE | TRP | location server /LMF |

1301    configuration information

configuration information    1303

1305    configuration information

1307    signal related to configuration information

1309    information related to positioning

information related to positioning    1311

information related to positioning    1313

## FIG. 17

UE

1401(a) — configuration information

1403(a) — receiving signal related to configuration information

1405(a) — transmitting information related to postitioning

TRP

1401(b) — receiving/transmitting configuration information

1403(b) — transmitting signal related to configuration information

1405(b) — receiving/transmitting information related to postitioning

location server /LMF

1401(c) — transmitting configuration information

1405(c) — receiving information related to positioning

# FIG. 18

# FIG. 19

UE

Network Node

configuring DCI ~1901

PDCCH ⟶ 1903

# FIG. 20

```
┌─────────────────┐
│       UE        │
└─────────────────┘
          │
          ▼
┌─────────────────────────┐
│   monitoring PDCCH      │──2003
└─────────────────────────┘
          │
          ▼
┌─────────────────────────┐
│    obtaining DCI        │──2005
└─────────────────────────┘
          │
          ▼
```

# FIG. 21

```
┌─────────────────────┐
│    Network Node     │
└─────────────────────┘
           │
           ▼
┌─────────────────────┐
│   configuring DCI   │───2101
└─────────────────────┘
           │
           ▼
┌─────────────────────┐
│  transmitting PDCCH │───2103
└─────────────────────┘
           │
           ▼
```

# FIG. 22

# FIG. 23

<u>1</u>

100f — IoT device

Home Appliance — 100e

400 — AI Server/device

150a

150a

150a

200

150a  300  150a

Network (5G)

Hand-held device — 100d

200

100a — Robot

150a  200a

150a

200 150c 200 150a

XR device — 100c

100b-1 — Vehicle

Vehicle — 100b-2

150b

# FIG. 24

# FIG. 25

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

FIG. 26

140a

Power supply unit

100

108

110

120

130

Communication unit

Control unit

Memory unit

140c

140b

I/O unit

Display

Interface unit

140d

# FIG. 27

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108

208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2021/014017** |

### A. CLASSIFICATION OF SUBJECT MATTER

**H04L 5/00**(2006.01)i; **H04W 64/00**(2009.01)i; **H04W 76/28**(2018.01)i; **H04W 52/02**(2009.01)i

According to International Patent Classification (IPC) or to both national classification and IPC

### B. FIELDS SEARCHED

Minimum documentation searched (classification system followed by classification symbols)

H04L 5/00(2006.01); H04W 4/90(2018.01); H04W 48/12(2009.01); H04W 72/04(2009.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PRS, DCI, 지시자(indicator), PDCCH

### C. DOCUMENTS CONSIDERED TO BE RELEVANT

| Category* | Citation of document, with indication, where appropriate, of the relevant passages | Relevant to claim No. |
| --- | --- | --- |
| Y | WO 2020-198517 A1 (APPLE INC.) 01 October 2020 (2020-10-01)<br>See paragraphs [0200]-[0203]; and claims 1-63. | 1-2,5-9,11-15 |
| A | | 3-4,10 |
| Y | QUALCOMM INCORPORATED. Potential enhancements for NR Rel-17 positioning. R1-2006810, 3GPP TSG RAN WG1 Meeting #102-e. 08 August 2020.<br>See section 4.1.2. | 1-2,5-9,11-15 |
| Y | KR 10-2011-0126034 A (LG ELECTRONICS INC.) 22 November 2011 (2011-11-22)<br>See paragraphs [0002]-[0021]; and claims 1-17. | 2,9 |
| Y | US 2020-0053703 A1 (QUALCOMM INCORPORATED) 13 February 2020 (2020-02-13)<br>See paragraph [0081]; and claims 1-30. | 5 |
| Y | KR 10-2018-0128043 A (HUAWEI TECHNOLOGIES CO., LTD.) 30 November 2018 (2018-11-30)<br>See paragraphs [0006]-[0017]; and claims 1-99. | 6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 January 2022** | **28 January 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/014017**

| Patent document cited in search report | | | Publication date (day/month/year) | Patent family member(s) | | | Publication date (day/month/year) |
|---|---|---|---|---|---|---|---|
| WO | 2020-198517 | A1 | 01 October 2020 | EP | 3858005 | A1 | 04 August 2021 |
| | | | | WO | 2020-069162 | A1 | 02 April 2020 |
| | | | | WO | 2020-198517 | A8 | 01 October 2020 |
| KR | 10-2011-0126034 | A | 22 November 2011 | AU | 2011-251031 | A1 | 17 November 2011 |
| | | | | AU | 2011-251031 | B2 | 03 July 2014 |
| | | | | CA | 2799149 | A1 | 17 November 2011 |
| | | | | CA | 2799149 | C | 24 November 2015 |
| | | | | CN | 102939731 | A | 20 February 2013 |
| | | | | CN | 102939731 | B | 25 November 2015 |
| | | | | EP | 2569882 | A2 | 20 March 2013 |
| | | | | EP | 2569882 | B1 | 10 April 2019 |
| | | | | JP | 2013-526796 | A | 24 June 2013 |
| | | | | JP | 5559424 | B2 | 23 July 2014 |
| | | | | US | 2013-0058306 | A1 | 07 March 2013 |
| | | | | US | 8953483 | B2 | 10 February 2015 |
| | | | | WO | 2011-142640 | A2 | 17 November 2011 |
| | | | | WO | 2011-142640 | A3 | 15 March 2012 |
| US | 2020-0053703 | A1 | 13 February 2020 | CN | 112534900 | A | 19 March 2021 |
| | | | | EP | 3834521 | A1 | 16 June 2021 |
| | | | | WO | 2020-033894 | A1 | 13 February 2020 |
| KR | 10-2018-0128043 | A | 30 November 2018 | BR | 112018069878 | A2 | 05 February 2019 |
| | | | | CA | 3019646 | A1 | 05 October 2017 |
| | | | | CN | 108886457 | A | 23 November 2018 |
| | | | | CN | 108886457 | B | 30 November 2021 |
| | | | | EP | 3433968 | A1 | 30 January 2019 |
| | | | | JP | 2019-514268 | A | 30 May 2019 |
| | | | | JP | 2020-099057 | A | 25 June 2020 |
| | | | | JP | 6651650 | B2 | 19 February 2020 |
| | | | | JP | 6974513 | B2 | 01 December 2021 |
| | | | | US | 10270570 | B2 | 23 April 2019 |
| | | | | US | 10693610 | B2 | 23 June 2020 |
| | | | | US | 2017-0302419 | A1 | 19 October 2017 |
| | | | | US | 2019-0044678 | A1 | 07 February 2019 |
| | | | | US | 2020-0322108 | A1 | 08 October 2020 |
| | | | | WO | 2017-173388 | A1 | 05 October 2017 |
| | | | | WO | 2017-173388 | A8 | 05 October 2017 |

Form PCT/ISA/210 (patent family annex) (July 2019)